# EUROPEAN PATENT APPLICATION

(11) **EP 4 373 177 A1**
(43) Date of publication of application: **22.05.2024**
(21) Application number: 22841326.6
(22) Date of filing: 11.07.2022
(51) Int. Cl.: H04W 64/00

(54) **MEASUREMENT METHOD AND APPARATUS, COMMUNICATIONS DEVICE, STORAGE MEDIUM, AND SYSTEM**

(30) Priority: 12.07.2021 CN 202110786146
(71) Applicant: Vivo Mobile Communication Co., Ltd., Dongguan, Guangdong 523863 (CN)
(72) Inventor: ZHUANG, Zixun, Dongguan, Guangdong 523863 (CN); WANG, Yuanyuan, Dongguan, Guangdong 523863 (CN); SI, Ye, Dongguan, Guangdong 523863 (CN); WU, Huaming, Dongguan, Guangdong 523863 (CN)
(74) Representative: Murgitroyd & Company
(86) International application number: PCT/CN2022/104974
(87) International publication number: WO 2023/284690

(57) **Abstract**

This application discloses a measurement method and apparatus, a communication device, a storage medium, and a system. The measurement method includes: receiving, by a first terminal device, a sidelink reference signal of a second terminal device; and determining, by the first terminal device, a first measurement result corresponding to the sidelink reference signal. The first measurement result includes at least one of the following: a relative position, a distance, a position of the first terminal device, an angle measurement result, and a confidence.

## Description

### CROSS-REFERENCE TO RELATED APPLICATION

This application claims the priority of Chinese Patent Application No. 202110786146.3 filed in China on July 12, 2021, the entire content of which is hereby incorporated by reference.

### TECHNICAL FIELD

This application relates to the field of communication technologies, and specifically, to a measurement method and apparatus, a communication device, a storage medium, and a system.

### BACKGROUND

In a sidelink (sidelink) positioning scenario, when heights of antennas between two terminal devices that need to be positioned are different, relative positioning may be performed by using vertical angle information; and when the two terminal devices that need to be positioned include two or more than two antenna panels, relative positioning may be performed by using a horizontal angle. Currently, angle positioning may be used for relative positioning. Through angle positioning, relative positions between the two terminal devices can be determined, and relative directions of the two terminal devices can also be determined. However, in sidelink angle positioning, how to perform measurement is an urgent problem to be resolved.

### SUMMARY

Embodiments of this application provide a measurement method and apparatus, a communication device, a storage medium, and a system, which can resolve a problem of how to perform measurement in sidelink angle positioning.

According to a first aspect, a measurement method is provided. The method includes: receiving, by a first terminal device, a sidelink reference signal of a second terminal device; and determining, by the first terminal device, a first measurement result corresponding to the sidelink reference signal, where the first measurement result includes at least one of the following: a relative position, a distance, a position of the first terminal device, an angle measurement result, and a confidence.

According to a second aspect, a measurement method is provided. The method includes: sending, by a second terminal device, a sidelink reference signal to a first terminal device, where the sidelink reference signal is used by the first terminal device to determine a first measurement result, and the first measurement result includes at least one of the following: a relative position, a distance, a position of the first terminal device, an angle measurement result, and a confidence.

According to a third aspect, a measurement method is provided. The method includes: receiving, by a control node, a first measurement result sent by a first terminal device, where the first measurement result is a measurement result determined by the first terminal device based on a sidelink reference signal sent by a second terminal device, and the first measurement result includes at least one of the following: a relative position, a distance, a position of the first terminal device, an angle measurement result, and a confidence.

According to a fourth aspect, a measurement apparatus is provided. The measurement apparatus includes: a receiving module and a determining module, where the receiving module is configured to receive a sidelink reference signal of a second terminal device; and the determining module is configured to determine a first measurement result corresponding to the sidelink reference signal, where the first measurement result includes at least one of the following: a relative position, a distance, a position of a first terminal device, an angle measurement result, and a confidence.

According to a fifth aspect, a measurement apparatus is provided. The measurement apparatus includes: a sending module, where the sending module is configured to send a sidelink reference signal to a first terminal device, where the sidelink reference signal is used by the first terminal device to determine a first measurement result, and the first measurement result includes at least one of the following: a relative position, a distance, a position of the first terminal device, an angle measurement result, and a confidence.

According to a sixth aspect, a measurement apparatus is provided. The measurement apparatus includes: a receiving module, where the receiving module is configured to receive a first measurement result sent by a first terminal device, where the first measurement result is a measurement result determined by the first terminal device based on a sidelink reference signal sent by a second terminal device, and the first measurement result includes at least one of the following: a relative position, a distance, a position of the first terminal device, an angle measurement result, and a confidence.

According to a seventh aspect, a terminal device is provided. The terminal device includes a processor, a memory, and a program or instructions stored in the memory and executable on the processor, the program or the instructions, when executed by the processor, implementing steps of the method according to the first aspect or the second aspect.

According to an eighth aspect, a terminal device is provided, including a processor and a communication interface, where the communication interface is configured to receive a sidelink reference signal of a second terminal device; and the processor is configured to determine a first measurement result corresponding to the sidelink reference signal, where the first measurement result includes at least one of the following: a relative position, a distance, a position of a first terminal device, an angle measurement result, and a confidence. Alternatively, the communication interface is configured to send a sidelink reference signal to a first terminal device, where the sidelink reference signal is used by the first terminal device to determine a first measurement result, and the first measurement result includes at least one of the following: a relative position, a distance, a position of the first terminal device, an angle measurement result, and a confidence.

According to a ninth aspect, a control node is provided. The control node includes a processor, a memory, and a program or instructions stored in the memory and executable on the processor, the program or the instructions, when executed by the processor, implementing steps of the method according to the third aspect.

According to a ninth aspect, a control node is provided, including a processor and a communication interface, where the communication interface is configured to receive a first measurement result sent by a first terminal device, where the first measurement result is a measurement result determined by the first terminal device based on a sidelink reference signal sent by a second terminal device, and the first measurement result includes at least one of the following: a relative position, a distance, a position of the first terminal device, an angle measurement result, and a confidence.

According to a tenth aspect, a readable storage medium is provided, storing a program or instructions, the program or the instructions, when executed by a processor, implementing steps of the method according to the first aspect, or implementing steps of the method according to the second aspect, or implementing steps of the method according to the third aspect.

According to a twelfth aspect, a communication system is provided, where the communication system includes the measurement apparatus according to the fourth aspect, the fifth aspect, or the sixth aspect; or the communication system includes the terminal device according to the seventh aspect and the control node according to the ninth aspect; or the communication system includes the terminal device according to the eighth aspect and the control node according to the tenth aspect.

According to a thirteenth aspect, a chip is provided, including: a processor and a communication interface, where the communication interface is coupled to the processor, and the processor is configured to run a program or instructions, to implement the method according to the first aspect, or implement the method according to the second aspect, or implement the method according to the third aspect.

According to a fourteenth aspect, a computer program/program product is provided. The computer program/program product is stored in a storage medium. The computer program/program product is executed by at least one processor to implement steps of the measurement method according to the first aspect, or implement steps of the measurement method according to the second aspect, or implement steps of the measurement method according to the third aspect.

In the embodiments of this application, a first terminal device may receive a sidelink reference signal of a second terminal device, and determine a first measurement result corresponding to the sidelink reference signal, where the first measurement result includes at least one of the following: a relative position, a distance, a position of the first terminal device, an angle measurement result, and a confidence. Through the solution, in a sidelink angle positioning scenario, the first terminal device may perform related measurement based on the sidelink reference signal of the second terminal device, that is, perform measurement of a position, a distance, an angle, and/or the like, to obtain a measurement result used for positioning the second terminal device, thereby implementing accurate positioning of the second terminal device.

### BRIEF DESCRIPTION OF THE DRAWINGS

FIG. 1 is a schematic diagram of an architecture of a communication system according to an embodiment of this application;
FIG. 2 is a schematic diagram of an example of a vertical angle positioning method in related technologies;
FIG. 3 is a schematic diagram of an example of a horizontal angle positioning method in the related technologies;
FIG. 4 is a schematic flowchart of a measurement method according to an embodiment of this application;
FIG. 5 is a first schematic diagram of a structure of a measurement apparatus according to an embodiment of this application;
FIG. 6 is a second schematic diagram of a structure of a measurement apparatus according to an embodiment of this application;
FIG. 7 is a third schematic diagram of a structure of a measurement apparatus according to an embodiment of this application;
FIG. 8 is a schematic diagram of a hardware structure of a communication device according to an embodiment of this application;
FIG. 9 is a schematic diagram of a hardware structure of a terminal device according to an embodiment of this application; and
FIG. 10 is a schematic diagram of a hardware structure of a control node according to an embodiment of this application.

### DETAILED DESCRIPTION

The following clearly describes the technical solutions in the embodiments of this application with reference to the accompanying drawings in the embodiments of this application. Apparently, the described embodiments are some embodiments of this application rather than all of the embodiments. All other embodiments obtained by a person of ordinary skill in the art based on the embodiments of this application fall within the protection scope of this application.

The specification and claims of this application, and terms "first" and "second" are used to distinguish similar objects, but are unnecessarily used to describe a specific sequence or order. It should be understood that the terms in such a way are interchangeable in proper circumstances, so that embodiments of this application can be implemented in other orders than the order illustrated or described herein. Objects distinguished by "first" and "second" are usually one type, and the quantity of objects is not limited. For example, the first object may be one or more than one. In addition, in the specification and the claims, "and/or" means at least one of the connected objects, and the character "/" generally indicates an "or" relationship between the associated objects.

It should be noted that, the technologies described in the embodiments of this application are not limited to a long term evolution (Long Term Evolution, LTE) system or an LTE-advanced (LTE-Advanced, LTE-A) system, and can also be used in other wireless communication systems, such as, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), and single-carrier frequency-division multiple access (Single-carrier Frequency-Division Multiple Access, SC-FDMA). The terms "system" and "network" in the embodiments of this application are often used interchangeably, and the described technology can be used not only for the above systems and radio technologies, but also for other systems and radio technologies. The following description describes a new radio (New Radio, NR) system for example objectives, and NR terms are used in most of the description below, although these technologies are also applicable to applications other than NR system applications, such as a 6-th generation (6-th Generation, 6G) communication system.

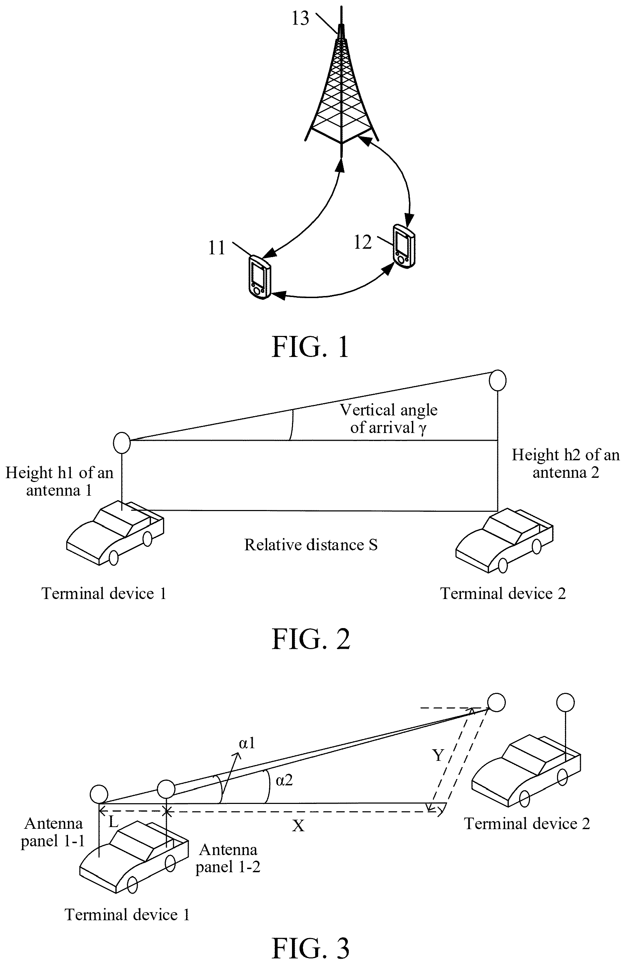

FIG. 1 is a block diagram of a wireless communication system to which the embodiments of this application are applicable. The wireless communication system includes a terminal device 11, a terminal device 12, and a control node 13.

It should be noted that, the terminal device 11 and the terminal device 12 may perform signaling/data interaction, the terminal device 11 and the control node 13 may perform signaling/data interaction, and the terminal device 12 and the control node 13 may perform signaling/data interaction. A link between the terminal device 11 and the terminal device 12 is referred to as a sidelink (sidelink).

The terminal device may also be referred to as a terminal or a user terminal (User Equipment, UE). The terminal device may be a terminal side device such as a mobile phone, a tablet computer (Tablet Personal Computer), a laptop computer (Laptop Computer) or referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), a wearable device (Wearable Device) or in-vehicle equipment (VUE), or a pedestrian terminal (PUE). The wearable device includes: a smart watch, a bracelet, a headset, glasses, or the like. It should be noted that, a specific type of the terminal device is not limited the embodiments of this application.

The control node may be a network side device such as a base station, a service base station, or a position server; or may be a UE; or may be a road side unit (Road Side Unit, RSU) or another control device; or the like. It should be noted that, in FIG. 1, an example in which the control node 13 is a base station is used for illustration.

The network-side device may be a base station or a core network, where the base station may be referred to as a Node B, an evolved nodeB, an access point, a base transceiver station (Base Transceiver Station, BTS), a radio base station, a radio transceiver, a basic service set (Basic Service Set, BSS), an extended service set (Extended Service Set, ESS), a nodeB, an evolved nodeB (eNB), a home nodeB, a home evolved nodeB, a WLAN access point, a WiFi node, a transmitting reception point (Transmitting Reception Point, TRP), or another appropriate term in the field, as long as the same technical effect is achieved. The base station is not limited to a specific technical term. It should be noted that, a base station in the new radio (New Radio, NR) system is used as an example in the embodiments of this application, but a specific type of the base station is not limited.

Some concepts and/or terms involved in a measurement method and apparatus, a communication device, a storage medium, and a system that are provided in the embodiments of this application are described below.

### 1. Angle positioning method

The angle positioning method may be divided into a downlink angle of departure (Downlink Angle-of-Departure, DL-AoD) and an uplink angle of arrival (Uplink Angle-of-Arrival, UL-AoA).

In a DL-AoD positioning method, a UE may obtain reference signal received power (Reference Signal Received Power, RSRP) measurement values of DL-positioning reference signals (Positioning reference signals, PRSs) based on downlink reference signals of a plurality of transmission reception points (Transmission Reception Points, TRPs), and estimate position information of the UE based on the RSRP measurement values, spatial information of the downlink reference signals, and geographical coordinates of the TRPs.

In the DL-AoD positioning method, information that is sent by the UE and a base station respectively to an LMF is as follows: An LMF side receives assistance information sent by the base station, where per positioning reference signal has own beam information (beam information) and corresponds to corresponding angle information. After RSRP reported by the UE is received, the LMF selects a corresponding PRS (for example, a PRS with largest RSRP) based on the RSRP, and obtains a corresponding angle of departure based on beam information of the PRS. Assistance information of the DL-AoD may also be continued to be enhanced to improve angle measurement accuracy.

In a UL-AoA positioning method, a position of a UE is estimated based on UL-AoAs (which may also include UL-SRS-RSRP) of uplink reference signals obtained at different TRPs and other configuration information.

In the UL-AoA positioning method, information sent by a base station to an LMF is as follows: The base station measures an uplink positioning reference signal to obtain an uplink angle of arrival and reports the uplink angle of arrival to the LMF, and then the LMF performs angle positioning.

### 2. Sidelink

A long term evolution (Long Term Evolution, LTE) system supports sidelink (sidelink, or referred to as secondary link, side link, edge link, or the like) transmission, in other words, data transmission between terminal devices is directly performed on physical layers. An LTE sidelink performs communication based on broadcast. Although the LTE sidelink can be used for supporting basic security communication of vehicle to everything (vehicle to everything, V2X), the LTE sidelink is not suitable for other more advanced V2X services. A 5G NR system supports further sidelink transmission such as unicast, multicast, or multicast, thereby supporting more comprehensive service types.

Sidelink hybrid automatic repeat request (Hybrid Automatic Repeat Request, HARQ) feedback: To improve reliability and effectiveness of sidelink transmission, the sidelink HARQ is introduced in NR V2X. On a sidelink, a transmit node sends data/a transport block (transport block, TB) to a receive node, and the receive node determines whether data reception is successful. If the reception is successful, the receive node feeds back an acknowledgment (Acknowledgment, ACK) to the transmit node. If the reception is unsuccessful, the receive node feeds back a non-acknowledgment (Non-acknowledgment, NACK) to the transmit node. ACK/NACK transmission occurs on corresponding physical sidelink feedback channel (Physical sidelink Feedback Channel, PSFCH) resources (namely, a corresponding PSFCH).

A UE transmits a PSFCH carrying HARQ-ACK information on one or more sub-channels (sub-channel) as a response to reception of a physical sidelink shared channel (Physical Sidelink Shared Channel, PSSCH). The UE obtains a PSFCH resource period through periodic (period) PSFCH resources (resource), where a value thereof is that N=0/1/2/4 slots (slots). When the parameter value is 0, the UE does not transmit the PSFCH.

If the UE receives the PSSCH in a resource pool, and a sidelink control information (Sidelink Control information, SCI) format 0_2 is for scheduling the reception of the PSSCH to indicate the UE to report the HARQ-ACK information, the UE carries the HARQ-ACK information on resources used for PSFCH transmission. A processing delay between a last slot in which the UE receives PSSCH data and a slot in which a corresponding PSFCH is transmitted is obtained through a parameter MinTimeGap PSFCH, and a value thereof is that k=2 or 3 slots.

RBs used for PSFCH transmission in the resource pool are divided based on a slot index and a sub-channel index. There are two mapping manners between the PSSCH and corresponding PSFCH feedback resources.

Option 1: The HARQ-ACK information is only transmitted on PSFCH resources corresponding to a start sub-channel in sub-channels occupied by the PSSCH data.

Option 2: The HARQ-ACK information is transmitted on PSFCH resources corresponding to all sub-channels occupied by the PSSCH data.

The UE determines a resource index used for PSFCH transmission based on a receive identifier (ID) and a transmit ID, and introduces a cyclic shift pair, in other words, uses a code division technology to expand the PSFCH transmission resources.

Resource allocation: In NR V2X, two resource allocation modes (mode) are defined, where one is a model in which the base station schedules resources; and the other one is a mode2 in which the UE independently determines what resources to be used for transmission, and in this case, resource information may come from a broadcast message of the base station or preconfigured information. If the UE works within a range of the base station and has a radio resource control (Radio Resource Control, RRC) connection with the base station, the UE can work in the mode1 and/or the mode2. If the UE works within the range of the base station but has no RRC connection with the base station, the UE can only work in the mode2. If the UE works outside the range of the base station, the UE can only work in the mode2, and perform V2X transmission based on preconfigured information.

For the mode2, a specific working manner is as follows: (1) After a resource selection is triggered, a TX UE first determines a resource selection window, where a lower boundary of the resource selection window is at T1 time after the resource selection is triggered, and an upper boundary of the resource selection window is at T2 time after the trigger. T2 is a value selected by an implementation of the UE in a packet delay budget (packet delay budget, PDB) of transmission block (Transmission Block, TB) transmission of the UE, and T2 is not earlier than T1. (2) Before the resource selection, the UE needs to determine a candidate resource set (candidate resource set) for the resource selection, and compares RSRP measured based on a resource in the resource selection window with a corresponding RSRP threshold. If the RSRP is lower than the RSRP threshold, the resource may be added in the candidate resource set. (3) After the resource set is determined, the UE randomly selects transmission resources from the candidate resource set. In addition, the UE may reserve transmission resources for next transmission during current transmission.

### 3. Antenna configuration in a sidelink

When heights of antennas between two terminal devices that need to be positioned are different, relative positioning may be performed by using vertical angle information; and when the two terminal devices that need to be positioned include two or more than two antenna panels, relative positioning may be performed by using a horizontal angle.

### 4. Angle positioning method in a sidelink

### (1) Perform positioning by using a vertical angle:

As shown in FIG. 2, by using a terminal device 1 and a terminal device 2 as an example, a relative distance S may be estimated based on Tan(γ)=(h2-h1)/S, and combined solving is performed by using measurement results of a plurality of antenna panels, y is a vertical angle of arrival, h1 is a height of an antenna 1, and h2 is a height of an antenna 2.

### (2) Perform positioning by using a horizontal angle:

As shown in FIG. 3, by using an antenna panel 1-1 and an antenna panel 1-2 as an example, based on tan(α1)=Y/(X+L) and tan(α2)=Y/X, per relative distance may be calculated by combining the two equations; and combined solving is performed by using measurement results of a plurality of antenna panels. α1 is a horizontal angle of arrival 1 (namely, a horizontal angle of arrival corresponding to the antenna panel 1-1), α2 is a horizontal angle of arrival 2 (namely, a horizontal angle of arrival corresponding to the antenna panel 1-2), Y is a relative distance in a y direction, X is a relative distance in an x direction, and L is a panel relative distance.

### Embodiment 1

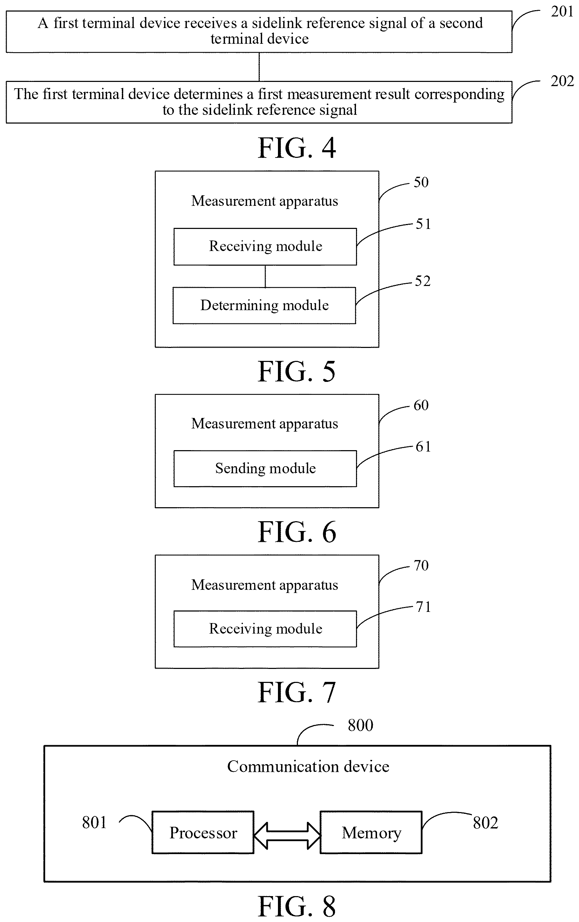

This embodiment of this application provides a measurement method. FIG. 4 is a flowchart of a measurement method according to an embodiment of this application. As shown in FIG. 4, the measurement method provided in this embodiment of this application may include the following step 201 and step 202.

Step 201: A first terminal device receives a sidelink reference signal of a second terminal device.

It should be noted that, the second terminal device in this embodiment of this application may be one terminal device, or may be a plurality of terminal devices.

Optionally, in this embodiment of this application, the first terminal device and the second terminal device may include at least one of the following types: a vehicle terminal (VUE), a pedestrian terminal (PUE), a road side unit (RSU), and the like.

Step 202: The first terminal device determines a first measurement result corresponding to the sidelink reference signal.

In this embodiment of this application, the first measurement result includes at least one of the following: a relative position, a distance, a position of a first terminal device, an angle measurement result, and a confidence.

It should be noted that, the confidence may be a confidence (or uncertainty) of the relative position, and/or a confidence of the distance, and/or a confidence of the position of the first terminal device, and/or a confidence of the angle measurement result.

In this embodiment of this application, the first measurement result may specifically include at least one of the following:
the relative position and/or the confidence of the relative position;
the distance and/or the confidence of the distance;
the position of the first terminal device and/or the confidence of the position of the first terminal device; and
the angle measurement result and/or the confidence of the angle measurement result.

It should be noted that, the relative position is a relative position between the first terminal device and the second terminal device, the distance is a distance between the first terminal device and the second terminal device, and the angle measurement result is a measurement result of an angle between the first terminal device and the second terminal device.

Optionally, in this embodiment of this application, the first measurement result may further include at least one of the following: a receiving-transmitting (RX-TX) time difference, a time difference of arrival of the sidelink reference signal, time of arrival of the sidelink reference signal, and the like.

Optionally, in this embodiment of this application, the relative position includes at least one of the following: a reference direction, an angle of arrival, an angle of departure, and a relative distance.

Optionally, in this embodiment of this application, the angle measurement result includes at least one of the following: an angle of arrival, an angle of departure, angle error information, angle confidence information, RSRP information, reference signal received quality (reference Signal Received Quality, RSRQ) information, time stamp information, a reference direction, coordinate system conversion information, and angle rotation (change) information.

Optionally, in this embodiment of this application, the angle of arrival is a horizontal angle of arrival (namely, an estimated azimuth) and a vertical angle of arrival (namely, a vertical angle) of the first terminal device relative to the reference direction.

Optionally, in this embodiment of this application, the angle of departure includes a horizontal angle of arrival and a vertical angle of arrival of the second terminal device relative to the reference direction.

It should be noted that, the angle of arrival is an angle of arrival of the first terminal device determined on an antenna of the first terminal device, and corresponds to a sidelink channel between the first terminal device and the second terminal device. The angle of departure is an angle of departure of the second terminal device determined on the antenna of the first terminal device, and corresponds to the sidelink channel between the first terminal device and the second terminal device.

Optionally, in this embodiment of this application, the reference direction includes at least one of the following: a global coordinate system (Global Coordinate System, GCS), a local coordinate system (Local Coordinate System, LCS), a speed direction of the first terminal device, a speed direction of the second terminal device, a trajectory direction of the first terminal device, and a trajectory direction of the second terminal device.

Optionally, in this embodiment of this application, in the global coordinate system (GCS), the estimated azimuth is measured relative to geographic north and a counterclockwise direction is positive, and the estimated vertical angle is measured relative to a zenith and is positive relative to a horizontal direction.

Optionally, in this embodiment of this application, in the local coordinate system (LCS), the estimated azimuth is measured relative to an x axis of the LCS and a counterclockwise direction is positive, and the estimated vertical angle is measured relative to a z axis of the LCS and an x-y plane direction is positive.

Optionally, in this embodiment of this application, the time stamp information includes at least one of the following:
a time stamp corresponding to the first terminal device;
a relative time stamp of the first terminal device and the second terminal device;
a relative time stamp of the first terminal device and a control node;
an identifier of the first terminal device associated with a time stamp;
an identifier of the second terminal device associated with a time stamp;
an identifier of a terminal device pair associated with a time stamp, where the terminal device pair includes the first terminal device and the second terminal device; and
an identifier of the control node associated with a time stamp.

It should be noted that, the terminal device pair may be understood as that the first terminal device and the second terminal device is an associated device group, and per associated device group has one piece of identification information. In this case, the time stamp is associated with the identifier.

Optionally, in this embodiment of this application, the time stamp corresponding to the first terminal device may include at least one of the following: a system frame number (System Frame Number, SFN), a slot (slot) number, a subframe (subframe) number, and the like.

Optionally, in this embodiment of this application, the time stamp corresponding to the first terminal device may be timing (timing) based on a sidelink, or timing of uu (a control node, for example, a serving cell).

Optionally, in this embodiment of this application, the relative time stamp of the first terminal device and the second terminal device may include at least one of the following: a subframe quantity, a slot quantity, a symbol quantity, and time measured in seconds/milliseconds/nanoseconds.

Optionally, in this embodiment of this application, the relative time stamp of the first terminal device and the control node may include at least one of the following: a subframe quantity, a slot quantity, a symbol quantity, and time measured in seconds/milliseconds/nanoseconds.

It should be noted that, the angle rotation information is angle change information relative to a specific moment or a specific positioning reference signal or specific measurement.

Optionally, in this embodiment of this application, the angle rotation information may include at least one of the following: an angle rotation value, an RSRP change value, an angle rotation direction, a reference moment, a reference positioning reference signal, reference RSRP, a reference angle, a reference angle rotation value, and a reference angle rotation direction.

It should be noted that, the reference angle rotation value and the reference angle rotation direction are expectation/estimation of a rotation angle and a rotation direction provided by the first terminal device, to provide help for the second terminal device or a reference node when calculating the angle rotation value and the angle direction, to make the measurement more accurate.

Optionally, in this embodiment of this application, the angle measurement result further includes at least one of the following: a first path angle measurement result and an additional path angle measurement result.

The first path angle measurement result includes at least one of the following: a first path angle of arrival, a first path angle of departure, and first path RSRP information; and the additional path angle measurement result includes at least one of the following: an additional path angle of arrival, an additional path angle of departure, and additional path RSRP information.

Optionally, in this embodiment of this application, the first path angle measurement result is measured and/or reported by per first path, and per first path measures and/or reports at least one angle measurement result.

Optionally, in this embodiment of this application, the additional path angle measurement result is measured and/or reported by per additional path, and per additional path measures and/or reports at least one angle measurement result.

Optionally, in this embodiment of this application, a quantity of the at least one angle measurement result is determined by any one of the following: protocol agreement, an indication of the second terminal device, and an indication of a control node.

Optionally, in this embodiment of this application, definitions of a "first path" and related measurement quantities are as follows.
(1) A definition of the first path includes any one of the following:
   the first path is a first detected path under a sidelink reference signal resource/resource set, that is, a path with a smallest distance between time when the path is received and start time of a subframe i, where the subframe i is a subframe at which the sidelink reference signal resource/resource set is received;
   the first path is a first detected path under a sidelink reference signal resource/resource set, that is, a path with a smallest distance between time when the path is received and start time of a symbol i, where the symbol i is a symbol at which the sidelink reference signal resource/resource set is received; and
   the first path is a path with strongest PSRP under a sidelink reference signal resource/resource set.
(2) A definition of first path PSRP includes any one of the following:
   an amplitude value of a channel impulse response (Channel Impulse Response, CIR) corresponding to the first path;
   received energy/power of a channel corresponding to the first path; and
   a linear average of power of resource elements (Resource Elements, REs) carrying sidelink reference signals configured for RSRP measurement within a considered measurement frequency bandwidth on the first path.
(3) A definition of a first path angle includes any one of the following:
   the first path angle of arrival is a horizontal and/or vertical angle of a first path on the sidelink channel between the first terminal device and the second terminal device relative to a reference direction on the first terminal device, where the reference direction may be a reference direction in the global coordinate system (GCS) or the local coordinate system (LCS); and
   the first path angle of departure is a horizontal and/or vertical angle of the first path on the sidelink channel between the first terminal device and the second terminal device relative to a reference direction on the second terminal device, where the reference direction may be a reference direction in the global coordinate system (GCS) or the local coordinate system (LCS).

Optionally, in this embodiment of this application, definitions of an "additional path" and related measurement quantities are as follows.
(1) A definition of the additional path includes any one of the following:
   the additional path is a detected path other than the first path under a sidelink reference signal resource/resource set;
   the additional path is a plurality of paths with a smallest time difference from time of arrival (Time Of Arrival, TOA) of the first path or a time difference of arrival (RSTD) of the first path or a receiving time difference of arrival (Rx-Tx time difference) under a sidelnik reference signal resource/resource set;
   the additional path is a plurality of paths closest to the first path angle of arrival/angle of departure under a sidelink reference signal resource/resource set; and
   the additional path is a plurality of paths with a smallest PSRP difference from the first path under a sidelink reference signal resource/resource set.
(2) A definition of additional path PSRP includes any one of the following:
   an amplitude value of a CIR corresponding to the additional path;
   received energy/power of a channel corresponding to the additional path; and
   a linear average of power of resource elements (REs) carrying sidelink reference signals configured for RSRP measurement within a considered measurement frequency bandwidth on the additional path.
(3) A definition of an additional path angle includes any one of the following:
   the additional path angle of arrival is a horizontal and/or vertical angle of an additional path on a sidelink channel between a terminal 1 and a terminal 2 relative to a reference direction on the terminal 1, where the reference direction may be a reference direction in the global coordinate system (GCS) or the local coordinate system (LCS); and
   the additional path angle of departure is a horizontal and/or vertical angle of the additional path on the sidelink channel between the terminal 1 and the terminal 2 relative to a reference direction on the terminal 2, where the reference direction may be a reference direction in the global coordinate system (GCS) or the local coordinate system (LCS).

Optionally, in this embodiment of this application, after step 202, the measurement method provided in this embodiment of this application further includes the following step 203.

Step 203: The first terminal device sends the first measurement result to the second terminal device and/or a control node.

It should be noted that, the control node may be a network side device (such as a base station, a service base station), or a position server, a UE, an RSU), another control device, or the like.

Optionally, in this embodiment of this application, step 203 may be specifically implemented through at least one of the following step 203a to step 203e.

Step 203a: The first terminal device sends the first measurement result to the second terminal device and/or the control node in the first manner.

In this embodiment of this application, the first manner is broadcast, multicast or unicast.

Step 203b: The first terminal device sends the first measurement result to the second terminal device and/or the control node on a PSSCH.

Step 203e: The first terminal device sends the first measurement result to the second terminal device and/or the control node on a PSFCH.

Step 203d: The first terminal device sends the first measurement result to the second terminal device and/or the control node through a Uu interface.

Step 203e: The first terminal device sends the first measurement result to the second terminal device and/or the control node by using a preconfigured candidate resource set or resource pool.

It should be noted that, the candidate resource set or resource pool means that the second terminal device selects corresponding resources based on a specific rule, for example, configures the candidate resource set or resource pool by using per resource pool (per resource pool).

Optionally, in this embodiment of this application, the first measurement result may be measured and/or reported by per antenna panel/port/ARP; and per antenna panel/port/ARP may report one or more first measurement results, in other words, first measurement information may be associated with the antenna panel/port/ARP.

Optionally, in this embodiment of this application, the quantity of angle measurement results is agreed in a protocol, or indicated by the second terminal device, or indicated by the control node.

Optionally, the measurement method provided in this embodiment of this application further includes the following step 204.

Step 204: The first terminal device receives a measurement result request sent by the second terminal device or the control node request.

In this embodiment of this application, the measurement result request includes at least one of the following: a positioning measurement result request, a positioning result request, a positioning request type, first indication information, second indication information, third indication information, and a measurement result feedback period, where the first indication information indicates whether additional path (additional path) measurement is required, the second indication information indicates whether first path (first path) measurement is required, and the third indication information indicates whether receive beam information of the first terminal device is required.

Optionally, in this embodiment of this application, the first indication information further indicates a quantity of additional paths, for example, a quantity of measurement values of per additional path.

Optionally, in this embodiment of this application, the second indication information further indicates a quantity of measurement values of per first path.

Optionally, in this embodiment of this application, before sending the first measurement result, the first terminal device may receive the measurement result request, where the measurement result request comes from the second terminal device or the control node.

Optionally, in this embodiment of this application, the measurement result request is sent by the second terminal device or the control node in a first manner, where the first manner is broadcast, multicast or unicast.

Optionally, in this embodiment of this application, the measurement result request is sent by the second terminal device or the control node by using a preconfigured candidate resource set or resource pool.

Optionally, in this embodiment of this application, the measurement result request is sent by the second terminal device or the control node through a Uu interface.

Optionally, in this embodiment of this application, the measurement result request is carried in first stage SCI, second stage SCI, or a PSSCH.

Optionally, in this embodiment of this application, the measurement result request is carried in a payload of the sidelink reference signal of the second terminal device for sending.

It should be noted that, the sidelink reference signal herein may be the sidelink reference signal in step 201, or may be another sidelink reference signal of the second terminal device. For example, the measurement result request is carried in the payload (payload) of the sidelink reference signal, and the first terminal device also demodulates corresponding measurement information when demodulating the sidelink reference signal.

Optionally, in this embodiment of this application, the measurement result request is carried in first assistance information for sending.

It should be noted that, the measurement result request may be carried in the first assistance information, or may be the same as a resource set or a resource pool used for sending the first assistance information.

Optionally, in this embodiment of this application, step 202 may be specifically implemented through the following step 202a.

Step 202a: In a case that the first terminal device has not received a measurement result request and the first terminal device has received the sidelink reference signal and/or first assistance information, the first terminal device measures and/or sends the first measurement result corresponding to the sidelink reference signal.

It may be understood that, in the manner, the measurement result request is not explicitly indicated, to be specific, the first terminal device may measure and feed back the first measurement result after receiving the sidelink reference signal and/or the first assistance information.

Optionally, in this embodiment of this application, the first terminal device may alternatively measure and feed back the first measurement result after a specific condition is met.

Optionally, the measurement method provided in this embodiment of this application further includes the following step 205.

Step 205: The first terminal device receives first assistance information sent by the second terminal device or the control node.

In this embodiment of this application, the first assistance information includes at least one of the following: identification information of the second terminal device, position information of the second terminal device, identification information of the first terminal device, identification information of a transmit antenna panel, position information of the antenna panel, identification information of a transmit antenna port, position information of the antenna port, identification information of an antenna reference point (Antenna Reference Point, ARP), position information of the antenna reference point, height information of a transmit antenna, position information of the antenna, identification information of a transmit beam, angle information of the transmit beam, quasi co-location (Quasi Co-Location, QCL) information, speed information of the second terminal device, trajectory information of the second terminal device, a measured and/or reported reference direction, an expected angle measurement window, and a coordinate system and a reference direction of the expected angle measurement window.

Optionally, in this embodiment of this application, the second terminal device may alternatively send the first assistance information to the first terminal device or the control node.

Optionally, in this embodiment of this application, the first assistance information may further include an expected (expected) AOA/AOD and a coordinate system corresponding to the expected AOA/AOD, and the expected AOA/AOD may be an AOA/AOD expected by per (per) UE/per UE pair (pair)/per antenna/per antenna pair/per ARP/per ARP pair.

Optionally, in this embodiment of this application, a configuration manner of the expected angle measurement window includes at least one of the following: configuring for per terminal device, configuring for per terminal device pair, configuring for per antenna, configuring for per antenna pair, configuring for per ARP, and configuring for per ARP pair.

Optionally, in this embodiment of this application, the expected angle measurement window includes at least one of the following: identification information of the terminal device pair, identification information of the antenna pair, and identification information of the ARP pair.

It should be noted that, the configuration manner of the expected angle measurement window is different, and an indication manner of the expected angle measurement window is also different. For example, when the configuration manner of the expected angle measurement window is configuring for per terminal device, the expected angle measurement window is indicated through identification information (for example, an ID) of the terminal device; and when the configuration manner of the expected angle measurement window is configuring for per terminal device pair, the expected angle measurement window is indicated through identification information (for example, an ID) of the terminal device pair.

Optionally, in this embodiment of this application, the first assistance information is sent by the second terminal device or the control node in a first manner, where the first manner is broadcast, multicast or unicast.

Optionally, in this embodiment of this application, the first assistance information is sent by the second terminal device or the control node by using a preconfigured candidate resource set or resource pool.

Optionally, in this embodiment of this application, the first assistance information is sent by the second terminal device or the control node through a Uu interface.

Optionally, in this embodiment of this application, the first assistance information is carried in first stage SCI, second stage SCI, or a PSSCH for sending.

Optionally, in this embodiment of this application, the first measurement result further includes at least one of the following: identification information of the first terminal device, identification information of a receive antenna panel, identification information of a receive antenna port, identification information of a receive ARP, identification information of the sidelink reference signal, line of sight (Line Of Sight, LOS)/non line of sight (Not Line Of Sight, NLOS) indication information, identification information of a receive beam, speed information of the first terminal device, trajectory information of the first terminal device, and antenna information of the first terminal device.

Optionally, the measurement method provided in this embodiment of this application further includes the following step 206.

Step 206: The first terminal device sends antenna information to the second terminal device and/or the control node.

in this embodiment of this application, the antenna information includes at least one of the following: panel information, antenna information in a panel, and ARP information.

Optionally, in this embodiment of this application, the antenna information may be reported by the first terminal device in the first measurement result, or may be reported by the first terminal device in advance.

Optionally, in this embodiment of this application, the antenna information may include the ARP information and an association relationship, where the association relationship is an association relationship between an ARP and a sidelink reference signal/sidelink reference signal resource set (resource set)/sidelink reference signal resource (resource), or an association relationship between the ARP and the first measurement result.

Optionally, in this embodiment of this application, the panel information and/or the antenna information in the panel may alternatively include an association relationship, where the association relationship is an association relationship between the panel and/or the antenna information in the panel and a sidelink reference signal/sidelink reference signal resource set (resource set)/sidelink reference signal resource (resource), or an association relationship between the panel and the first measurement result.

Optionally, in this embodiment of this application, the panel information includes at least one of the following: panel identification information, panel quantity information, and panel position information.

The panel position information includes at least one of the following: arrangement information of a plurality of panels, a panel spacing, a position relative to a reference panel, a position of a panel relative to a local coordinate system or a global coordinate system of the first terminal device, conversion parameters between the local coordinate system and the global coordinate system of the first terminal device, and a first position relationship. The first position relationship is a position relationship between a center position (or a contour position indicating a real position of the first terminal device) of the first terminal device and the local coordinate system or the global coordinate system of the first terminal device, or a position relationship between the center position of the first terminal device and an antenna panel.

Optionally, in this embodiment of this application, the panel position information further includes conversion parameters of the panel relative to the local coordinate system and the global coordinate system of the first terminal device.

Optionally, in this embodiment of this application, the second terminal device or the control node provides panel information for per sidelink reference signal/reference signal resource/reference signal resource set, or a sidelink reference signal/reference signal resource/reference signal resource set is associated with one piece of panel information.

Optionally, in this embodiment of this application, the first terminal device provides panel information for the first measurement result, or the first measurement result is associated with one piece of panel information.

It should be noted that, herein, that the first measurement result provides the panel information may be understood as at least one of the following: A first measurement result determined each time provides the panel information, and a first measurement result corresponding to per sidelink reference signal/reference signal resource/reference signal resource set provides the panel information.

Optionally, in this embodiment of this application, the antenna information in the panel includes at least one of the following: antenna height information, antenna identification information, antenna quantity information, antenna position information, and antenna polarization information.

Optionally, in this embodiment of this application, the antenna position information includes at least one of the following: arrangement information of a plurality of antennas, a position relative to a reference antenna, an antenna spacing, an antenna aperture, a position of an antenna in a panel, a position of the antenna relative to a local coordinate system or a global coordinate system of the first terminal device, conversion parameters between the local coordinate system and the global coordinate system of the first terminal device, and a second position relationship, where the second position relationship is a position relationship between a center position of the first terminal device and the local coordinate system or the global coordinate system of the first terminal device, or a position relationship between the center position of the first terminal device and the antenna.

Optionally, in this embodiment of this application, the second terminal device or the control node provides antenna information in the panel for per sidelink reference signal/reference signal resource/reference signal resource set, or a sidelink reference signal/reference signal resource/reference signal resource set is associated with one piece of antenna information in the panel.

Optionally, in this embodiment of this application, the first terminal device provides antenna information in the panel for the first measurement result, or the first measurement result is associated with one piece of antenna information in the panel.

Optionally, in this embodiment of this application, the ARP information includes at least one of the following: ARP identification information, ARP quantity information, and ARP position information.

Optionally, in this embodiment of this application, the ARP position information includes at least one of the following: arrangement information of a plurality of ARPs, a position of an ARP in an antenna panel, a position relative to a reference ARP, a spacing between ARPs, a position of the ARP relative to a local coordinate system or a global coordinate system of the first terminal device, conversion parameters between the local coordinate system and the global coordinate system of the first terminal device, and a third position relationship, where the third position relationship is a position relationship between a center position of the first terminal device and the local coordinate system or the global coordinate system of the first terminal device, or a position relationship between the center position of the first terminal device and the ARP.

Optionally, in this embodiment of this application, the second terminal device or the control node provides ARP information for per sidelink reference signal/reference signal resource/reference signal resource set, or a sidelink reference signal/reference signal resource/reference signal resource set is associated with one piece of ARP information.

Optionally, in this embodiment of this application, the first terminal device provides ARP information for the first measurement result, or the first measurement result is associated with one piece of ARP information.

Optionally, in this embodiment of this application, step 206 may be specifically implemented through at least one of the following step 206a to step 206e.

Step 206a: The first terminal device sends the antenna information to the second terminal device or the control node in a first manner.

In this embodiment of this application, the first manner is broadcast, multicast or unicast.

Step 206b: The first terminal device sends the antenna information to the second terminal device or the control node on a PSSCH.

Step 206e: The first terminal device sends the antenna information to the second terminal device or the control node on a PSFCH.

Step 206d: The first terminal device sends the antenna information to the second terminal device or the control node through a Uu interface.

Step 206e: The first terminal device sends the antenna information to the second terminal device or the control node by using a preconfigured candidate resource set or resource pool.

In a measurement method provided in an embodiment of this application, a first terminal device may receive a sidelink reference signal of a second terminal device, and determine a first measurement result corresponding to the sidelink reference signal, where the first measurement result includes at least one of the following: a relative position, a distance, a position of the first terminal device, an angle measurement result, and a confidence. Through the solution, in a sidelink angle positioning scenario, the first terminal device may perform related measurement based on the sidelink reference signal of the second terminal device, that is, perform measurement of a position, a distance, an angle, and/or the like, to obtain a measurement result used for positioning the second terminal device, thereby implementing accurate positioning of the second terminal device.

### Embodiment 2

This embodiment of this application provides a measurement method. The measurement method provided in this embodiment of this application may include the following step 301.

Step 301: A second terminal device sends a sidelink reference signal to a first terminal device.

In this embodiment of this application, the sidelink reference signal is used by the first terminal device to determine a first measurement result, and the first measurement result includes at least one of the following: a relative position, a distance, a position of the first terminal device, an angle measurement result, and a confidence.

Optionally, in this embodiment of this application, after step 301, the measurement method provided in this embodiment of this application further includes the following step 302.

Step 302: The second terminal device receives the first measurement result sent by the first terminal device.

Optionally, the measurement method provided in this embodiment of this application further includes the following step 303.

Step 303: The second terminal device sends a measurement result request to the first terminal device.

In this embodiment of this application, the measurement result request includes at least one of the following: a positioning measurement result request, a positioning result request, a positioning request type, first indication information, second indication information, third indication information, and a measurement result feedback period, where the first indication information indicates whether additional path measurement is required, the second indication information indicates whether first path measurement is required, and the third indication information indicates whether receive beam information of the first terminal device is required.

Optionally, in this embodiment of this application, step 303 may be specifically implemented through at least one of the following step 303a to step 303f.

Step 303a: The second terminal device sends the measurement result request to the first terminal device in a first manner.

In this embodiment of this application, the first manner is broadcast, multicast or unicast.

Step 303b: The second terminal device sends the measurement result request to the first terminal device by using a preconfigured candidate resource set or resource pool.

Step 303c: The second terminal device sends the measurement result request to the first terminal device through a Uu interface.

Step 303d: The second terminal device carries the measurement result request in first stage SCI, second stage SCI, or a PSSCH for sending.

Step 303e: The second terminal device carries the measurement result request in a payload of the sidelink reference signal for sending.

Step 303f: The second terminal device carries the measurement result request in first assistance information for sending.

Optionally, the measurement method provided in this embodiment of this application further includes the following step 304.

Step 304: The second terminal device sends first assistance information to the first terminal device and/or a control node.

In this embodiment of this application, the first assistance information includes at least one of the following: identification information of the second terminal device, position information of the second terminal device, identification information of the first terminal device, identification information of a transmit antenna panel, position information of the antenna panel, identification information of a transmit antenna port, position information of the antenna port, identification information of an ARP, position information of the antenna reference point, height information of a transmit antenna, position information of the antenna, identification information of a transmit beam, angle information of the transmit beam, QCL information, speed information of the second terminal device, trajectory information of the second terminal device, a measured and/or reported reference direction, an expected angle measurement window, and a coordinate system and a reference direction of the expected angle measurement window.

Optionally, in this embodiment of this application, step 304 may be specifically implemented through at least one of the following step 304a to step 304d.

Step 304a: The second terminal device sends the first assistance information to the first terminal device and/or the control node in a first manner.

In this embodiment of this application, the first manner is broadcast, multicast or unicast.

Step 304b: The second terminal device sends the first assistance information to the first terminal device and/or the control node by using a preconfigured candidate resource set or resource pool.

Step 304c: The second terminal device sends the first assistance information to the first terminal device and/or the control node through a Uu interface.

Step 304d: The second terminal device carries the first assistance information in first stage SCI, second stage SCI, or a PSSCH for sending.

Optionally, the measurement method provided in this embodiment of this application further includes the following step 305.

Step 305: The second terminal device receives antenna information sent by the first terminal device.

in this embodiment of this application, the antenna information includes at least one of the following: panel information, antenna information in a panel, and ARP information.

Optionally, the measurement method provided in this embodiment of this application further includes the following step 306.

Step 306: The second terminal device sends a second measurement result to the control node.

In this embodiment of this application, the second measurement result is the first measurement result, or a measurement result obtained by the second terminal device by processing the first measurement result.

It may be understood that, after the first measurement result sent by the first terminal device is received, the second terminal device may directly send the first measurement result to the control node, or may process the first measurement result and then send the processed first measurement result to the control node.

It should be noted that, for content involved in Embodiment 2, refer to specific descriptions in Embodiment 1. Details are not described herein again.

In a measurement method provided in an embodiment of this application, a second terminal device may send a sidelink reference signal to a first terminal device, so that the first terminal device determines a first measurement result corresponding to the sidelink reference signal. Through the solution, in a sidelink angle positioning scenario, the first terminal device may perform related measurement based on the sidelink reference signal of the second terminal device, that is, perform measurement of a position, a distance, an angle, and/or the like, to obtain a measurement result used for positioning the second terminal device, thereby implementing accurate positioning of the second terminal device.

### Embodiment 3

This embodiment of this application provides a measurement method. The measurement method provided in this embodiment of this application may include the following step 401.

Step 401: A control node receives a first measurement result sent by a first terminal device.

In this embodiment of this application, the first measurement result is a measurement result determined by the first terminal device based on a sidelink reference signal sent by a second terminal device, and the first measurement result includes at least one of the following: a relative position, a distance, a position of the first terminal device, an angle measurement result, and a confidence.

Optionally, the measurement method provided in this embodiment of this application further includes the following step 402.

Step 402: The control node sends a measurement result request to the first terminal device.

In this embodiment of this application, the measurement result request includes at least one of the following: a positioning measurement result request, a positioning result request, a positioning request type, first indication information, second indication information, third indication information, and a measurement result feedback period, where the first indication information indicates whether additional path measurement is required, the second indication information indicates whether first path measurement is required, and the third indication information indicates whether receive beam information of the first terminal device is required.

Optionally, in this embodiment of this application, step 402 may be specifically implemented through at least one of the following step 402a to step 402f.

Step 402a: The control node sends the measurement result request to the first terminal device in a first manner.

In this embodiment of this application, the first manner is broadcast, multicast or unicast.

Step 402b: The control node sends the measurement result request to the first terminal device by using a preconfigured candidate resource set or resource pool.

Step 402c: The control node sends the measurement result request to the first terminal device through a Uu interface.

Step 402d: The control node carries the measurement result request in first stage SCI, second stage SCI, or a PSSCH for sending.

Step 402e: The control node carries the measurement result request in a payload of the sidelink reference signal for sending.

Step 402f. The control node carries the measurement result request in first assistance information for sending.

Optionally, the measurement method provided in this embodiment of this application further includes the following step 403.

Step 403: The control node sends first assistance information to the first terminal device.

In this embodiment of this application, the first assistance information includes at least one of the following: identification information of the second terminal device, position information of the second terminal device, identification information of the first terminal device, identification information of a transmit antenna panel, position information of the antenna panel, identification information of a transmit antenna port, position information of the antenna port, identification information of an ARP, position information of the antenna reference point, height information of a transmit antenna, position information of the antenna, identification information of a transmit beam, angle information of the transmit beam, QCL information, speed information of the second terminal device, trajectory information of the second terminal device, a measured and/or reported reference direction, an expected angle measurement window, and a coordinate system and a reference direction of the expected angle measurement window.

Optionally, in this embodiment of this application, step 403 may be specifically implemented through at least one of the following step 403a to step 403d.

Step 403a: The control node sends the first assistance information to the first terminal device in a first manner.

In this embodiment of this application, the first manner is broadcast, multicast or unicast.

Step 403b: The control node sends the first assistance information to the first terminal device by using a preconfigured candidate resource set or resource pool.

Step 403c: The control node sends the first assistance information to the first terminal device through a Uu interface.

Step 403d: The control node carries the first assistance information in first stage SCI, second stage SCI, or a PSSCH for sending.

Optionally, the measurement method provided in this embodiment of this application further includes the following step 404.

Step 404: The control node receives antenna information sent by the first terminal device.

In this embodiment of this application, the antenna information includes at least one of the following: panel information, antenna information in a panel, and ARP information.

Optionally, the measurement method provided in this embodiment of this application further includes the following step 405.

Step 405: The control node receives first assistance information sent by the second terminal device.

Optionally, the measurement method provided in this embodiment of this application further includes the following step 406.

Step 406: The control node receives a second measurement result sent by the second terminal device.

In this embodiment of this application, the second measurement result is the first measurement result, or a measurement result obtained by the second terminal device by processing the first measurement result.

It should be noted that, for content involved in Embodiment 3, refer to specific descriptions in Embodiment 1. Details are not described herein again.

In a measurement method provided in an embodiment of this application, a control node may receive a first measurement result sent by a first terminal device, that is, a measurement result determined by the first terminal device based on a sidelink reference signal sent by a second terminal device. Through the solution, in a sidelink angle positioning scenario, the first terminal device may perform related measurement based on the sidelink reference signal of the second terminal device, that is, perform measurement of a position, a distance, an angle, and/or the like, to obtain a measurement result used for positioning the second terminal device, thereby implementing accurate positioning of the second terminal device.

It should be noted that, in the measurement method provided in the embodiments of this application, an execution entity may alternatively be a measurement apparatus, or a control module configured to execute the measurement method in the measurement apparatus.

FIG. 5 is a schematic diagram of a possible structure of a measurement apparatus according to an embodiment of this application. As shown in FIG. 5, a measurement apparatus 50 includes a receiving module 51 and a determining module 52.

The receiving module 51 is configured to receive a sidelink reference signal of a second terminal device. The determining module 52 is configured to determine a first measurement result corresponding to the sidelink reference signal, where the first measurement result includes at least one of the following: a relative position, a distance, a position of a first terminal device, an angle measurement result, and a confidence.

In a possible implementation, the relative position includes at least one of the following: a reference direction, an angle of arrival, an angle of departure, and a relative distance.

In a possible implementation, the angle measurement result includes at least one of the following: an angle of arrival, an angle of departure, angle error information, angle confidence information, RSRP information, RSRQ information, time stamp information, a reference direction, coordinate system conversion information, and angle rotation information.

In a possible implementation, the reference direction includes at least one of the following: a GCS, a LCS, a speed direction of the first terminal device, a speed direction of the second terminal device, a trajectory direction of the first terminal device, and a trajectory direction of the second terminal device.

In a possible implementation, the time stamp information includes at least one of the following:
a time stamp corresponding to the first terminal device;
a relative time stamp of the first terminal device and the second terminal device;
a relative time stamp of the first terminal device and a control node;
an identifier of the first terminal device associated with a time stamp;
an identifier of the second terminal device associated with a time stamp;
an identifier of a terminal device pair associated with a time stamp, where the terminal device pair includes the first terminal device and the second terminal device; and
an identifier of the control node associated with a time stamp.

In a possible implementation, the angle measurement result further includes at least one of the following: a first path angle measurement result and an additional path angle measurement result. The first path angle measurement result includes at least one of the following: a first path angle of arrival, a first path angle of departure, and first path RSRP information; and the additional path angle measurement result includes at least one of the following: an additional path angle of arrival, an additional path angle of departure, and additional path RSRP information.

In a possible implementation, the first path angle measurement result is measured and/or reported by per first path, and per first path measures and/or reports at least one angle measurement result; and/or the additional path angle measurement result is measured and/or reported by per additional path, and per additional path measures and/or reports at least one angle measurement result, where a quantity of the at least one angle measurement result is determined by any one of the following: protocol agreement, an indication of the second terminal device, and an indication of a control node.

In a possible implementation, the angle of arrival includes a horizontal angle of arrival and a vertical angle of arrival of the first terminal device relative to the reference direction; and/or the angle of departure includes a horizontal angle of arrival and a vertical angle of arrival of the second terminal device relative to the reference direction.

In a possible implementation, the measurement apparatus 50 provided in this embodiment of this application further includes: a sending module. The sending module is configured to send the first measurement result to the second terminal device and/or a control node after the determining module 52 determines the first measurement result corresponding to the sidelink reference signal.

In a possible implementation, the sending module is specifically configured to perform at least one of the following:
sending the first measurement result to the second terminal device and/or the control node in a first manner, where the first manner is broadcast, multicast or unicast;
sending the first measurement result to the second terminal device and/or the control node on a PSSCH;
sending the first measurement result to the second terminal device and/or the control node on a PSFCH;
sending the first measurement result to the second terminal device and/or the control node through a Uu interface; and
sending the first measurement result to the second terminal device and/or the control node by using a preconfigured candidate resource set or resource pool.

In a possible implementation, the receiving module 51 is further configured to receive a measurement result request sent by the second terminal device or the control node, where the measurement result request includes at least one of the following: a positioning measurement result request, a positioning result request, a positioning request type, first indication information, second indication information, third indication information, and a measurement result feedback period, where the first indication information indicates whether additional path measurement is required, the second indication information indicates whether first path measurement is required, and the third indication information indicates whether receive beam information of the first terminal device is required.

In a possible implementation, the measurement result request is sent by the second terminal device or the control node in a first manner, where the first manner is broadcast, multicast or unicast;
and/or
the measurement result request is sent by the second terminal device or the control node by using a preconfigured candidate resource set or resource pool;
   and/or
the measurement result request is sent by the second terminal device or the control node through a Uu interface;
   and/or
the measurement result request is carried in first stage SCI, second stage SCI, or a PSSCH;
   and/or
the measurement result request is carried in a payload of the sidelink reference signal of the second terminal device for sending;
   and/or
the measurement result request is carried in first assistance information for sending.

In a possible implementation, the determining module 52 is specifically configured to: in a case that the first terminal device has not received a measurement result request and the first terminal device has received the sidelink reference signal and/or first assistance information, measure and/or send the first measurement result corresponding to the sidelink reference signal.

In a possible implementation, the receiving module 51 is further configured to receive first assistance information sent by the second terminal device or a control node, where the first assistance information includes at least one of the following: identification information of the second terminal device, position information of the second terminal device, identification information of the first terminal device, identification information of a transmit antenna panel, position information of the antenna panel, identification information of a transmit antenna port, position information of the antenna port, identification information of an ARP, position information of the antenna reference point, height information of a transmit antenna, position information of the antenna, identification information of a transmit beam, angle information of the transmit beam, QCL information, speed information of the second terminal device, trajectory information of the second terminal device, a measured and/or reported reference direction, an expected angle measurement window, and a coordinate system and a reference direction of the expected angle measurement window.

In a possible implementation, a configuration manner of the expected angle measurement window includes at least one of the following: configuring for per terminal device, configuring for per terminal device pair, configuring for per antenna, configuring for per antenna pair, configuring for per ARP, and configuring for per ARP pair.

In a possible implementation, the expected angle measurement window includes at least one of the following: identification information of the terminal device pair, identification information of the antenna pair, and identification information of the ARP pair.

In a possible implementation, the first assistance information is sent by the second terminal device or the control node in a first manner, where the first manner is broadcast, multicast or unicast;
and/or
the first assistance information is sent by the second terminal device or the control node by using a preconfigured candidate resource set or resource pool;
   and/or
the first assistance information is sent by the second terminal device or the control node through a Uu interface;
   and/or
the first assistance information is carried in first stage SCI, second stage SCI, or a PSSCH for sending.

In a possible implementation, the first measurement result further includes at least one of the following: identification information of the first terminal device, identification information of a receive antenna panel, identification information of a receive antenna port, identification information of a receive ARP, identification information of the sidelink reference signal, LOS/NLOS indication information, identification information of a receive beam, speed information of the first terminal device, trajectory information of the first terminal device, and antenna information of the first terminal device.

In a possible implementation, the measurement apparatus 50 provided in this embodiment of this application further includes: a sending module. The sending module is configured to send antenna information to the second terminal device and/or a control node, where the antenna information includes at least one of the following: panel information, antenna information in a panel, and ARP information.

In a possible implementation, the panel information includes at least one of the following: panel identification information, panel quantity information, and panel position information. The panel position information includes at least one of the following: arrangement information of a plurality of panels, a panel spacing, a position relative to a reference panel, a position of a panel relative to a local coordinate system or a global coordinate system of the first terminal device, conversion parameters between the local coordinate system and the global coordinate system of the first terminal device, and a first position relationship. The first position relationship is a position relationship between a center position of the first terminal device and the local coordinate system or the global coordinate system of the first terminal device, or a position relationship between the center position of the first terminal device and an antenna panel.

In a possible implementation, the second terminal device or the control node provides panel information for per sidelink reference signal/reference signal resource/reference signal resource set, or a sidelink reference signal/reference signal resource/reference signal resource set is associated with one piece of panel information;
and/or
the first terminal device provides panel information for the first measurement result, or the first measurement result is associated with one piece of panel information.

In a possible implementation, the antenna information in the panel includes at least one of the following: antenna height information, antenna identification information, antenna quantity information, antenna position information, and antenna polarization information.

In a possible implementation, the antenna position information includes at least one of the following: arrangement information of a plurality of antennas, a position relative to a reference antenna, an antenna spacing, an antenna aperture, a position of an antenna in a panel, a position of the antenna relative to a local coordinate system or a global coordinate system of the first terminal device, conversion parameters between the local coordinate system and the global coordinate system of the first terminal device, and a second position relationship, where the second position relationship is a position relationship between a center position of the first terminal device and the local coordinate system or the global coordinate system of the first terminal device, or a position relationship between the center position of the first terminal device and the antenna.

In a possible implementation, the second terminal device or the control node provides antenna information for per sidelink reference signal/reference signal resource/reference signal resource set, or a sidelink reference signal/reference signal resource/reference signal resource set is associated with one piece of antenna information in the panel;
and/or
the first terminal device provides antenna information in the panel for the first measurement result, or the first measurement result is associated with one piece of antenna information in the panel.

In a possible implementation, the ARP information includes at least one of the following: ARP identification information, ARP quantity information, and ARP position information.

In a possible implementation, the ARP position information includes at least one of the following: arrangement information of a plurality of ARPs, a position of an ARP in an antenna panel, a position relative to a reference ARP, a spacing between ARPs, a position of the ARP relative to a local coordinate system or a global coordinate system of the first terminal device, conversion parameters between the local coordinate system and the global coordinate system of the first terminal device, and a third position relationship, where the third position relationship is a position relationship between a center position of the first terminal device and the local coordinate system or the global coordinate system of the first terminal device, or a position relationship between the center position of the first terminal device and the ARP.

In a possible implementation, the second terminal device or the control node provides ARP information for per sidelink reference signal/reference signal resource/reference signal resource set, or a sidelink reference signal/reference signal resource/reference signal resource set is associated with one piece of ARP information;
and/or
the first terminal device provides ARP information for the first measurement result, or the first measurement result is associated with one piece of ARP information.

In a possible implementation, the sending module is specifically configured to perform at least one of the following:
sending the antenna information to the second terminal device or the control node in a first manner, where the first manner is broadcast, multicast or unicast;
sending the antenna information to the second terminal device or the control node on a PSSCH;
sending the antenna information to the second terminal device or the control node on a PSFCH;
sending the antenna information to the second terminal device or the control node through a Uu interface; and
sending the antenna information to the second terminal device or the control node by using a preconfigured candidate resource set or resource pool.

In a measurement apparatus provided in an embodiment of this application, in a sidelink angle positioning scenario, the measurement apparatus may perform related measurement based on a sidelink reference signal of a second terminal device, that is, perform measurement of a position, a distance, an angle, and/or the like, to obtain a measurement result used for positioning the second terminal device, thereby implementing accurate positioning of the second terminal device.

The measurement apparatus in this embodiment of this application may be an apparatus, or an apparatus or a terminal device with an operating system; or may be a component, an integrated circuit, or a chip in a terminal device. The apparatus or the terminal device may be a mobile terminal or a non-mobile terminal. For example, the mobile terminal may include, but is not limited to, the types of the terminal 11 listed above, and the non-mobile terminal may be a server, a network attached storage (Network Attached Storage, NAS), a personal computer (personal computer, PC), a television (television, TV), an automatic teller machine, a self-service machine, or the like, which are not specifically limited in this embodiment of this application.

The measurement apparatus provided in this embodiment of this application can implement processes implemented by the first terminal device in the method embodiment, and achieve the same technical effects. To avoid repetition, details are not described herein again.

FIG. 6 is a schematic diagram of a possible structure of a measurement apparatus according to an embodiment of this application. As shown in FIG. 6, a measurement apparatus 60 may include: a sending module 61.

The sending module 61 is configured to send a sidelink reference signal to a first terminal device, where the sidelink reference signal is used by the first terminal device to determine a first measurement result, and the first measurement result includes at least one of the following: a relative position, a distance, a position of the first terminal device, an angle measurement result, and a confidence.

In a possible implementation, the measurement apparatus 60 provided in this embodiment of this application further includes: a receiving module. The receiving module is configured to receive a first measurement result sent by the first terminal device after the sending module 61 sends the sidelink reference signal to the first terminal device.

In a possible implementation, the sending module 61 is further configured to send a measurement result request to the first terminal device, where the measurement result request includes at least one of the following: a positioning measurement result request, a positioning result request, a positioning request type, first indication information, second indication information, third indication information, and a measurement result feedback period, where the first indication information indicates whether additional path measurement is required, the second indication information indicates whether first path measurement is required, and the third indication information indicates whether receive beam information of the first terminal device is required.

In a possible implementation, the sending module 61 is specifically configured to perform at least one of the following:
sending the measurement result request to the first terminal device in a first manner, where the first manner is broadcast, multicast or unicast;
   and/or
sending the measurement result request to the first terminal device by using a preconfigured candidate resource set or resource pool;
   and/or
sending the measurement result request to the first terminal device through a Uu interface;
   and/or
carrying the measurement result request in first stage SCI, second stage SCI, or a PSSCH for sending;
   and/or
carrying the measurement result request in a payload of the sidelink reference signal for sending;
   and/or
carrying the measurement result request in first assistance information for sending.

In a possible implementation, the sending module 61 is further configured to send first assistance information to the first terminal device and/or a control node, where the first assistance information includes at least one of the following: identification information of the second terminal device, position information of the second terminal device, identification information of the first terminal device, identification information of a transmit antenna panel, position information of the antenna panel, identification information of a transmit antenna port, position information of the antenna port, identification information of an ARP, position information of the antenna reference point, height information of a transmit antenna, position information of the antenna, identification information of a transmit beam, angle information of the transmit beam, QCL information, speed information of the second terminal device, trajectory information of the second terminal device, a measured and/or reported reference direction, an expected angle measurement window, and a coordinate system and a reference direction of the expected angle measurement window.

In a possible implementation, the sending module 61 is specifically configured to perform at least one of the following:
sending the first assistance information to the first terminal device and/or the control node in a first manner, where the first manner is broadcast, multicast or unicast;
sending the first assistance information to the first terminal device and/or the control node by using a preconfigured candidate resource set or resource pool;
sending the first assistance information to the first terminal device and/or the control node through a Uu interface; and
carrying the first assistance information in first stage SCI, second stage SCI, or a PSSCH for sending.

In a possible implementation, the measurement apparatus 60 provided in this embodiment of this application further includes: a receiving module. The receiving module is configured to receive antenna information sent by the first terminal device, where the antenna information includes at least one of the following: panel information, antenna information in a panel, and ARP information.

In a possible implementation, the sending module 61 is further configured to send a second measurement result to a control node, where the second measurement result is the first measurement result, or a measurement result obtained by the second terminal device by processing the first measurement result.

In a measurement apparatus provided in an embodiment of this application, in a sidelink angle positioning scenario, the measurement apparatus may send a sidelink reference signal to a first terminal device, so that the first terminal device performs related measurement based on the sidelink reference signal, that is, performs measurement of a position, a distance, an angle, and/or the like, to obtain a measurement result used for positioning a second terminal device, thereby implementing accurate positioning of the second terminal device.

The measurement apparatus provided in this embodiment of this application can implement processes implemented by the second terminal device in the method embodiment, and achieve the same technical effects. To avoid repetition, details are not described herein again.

FIG. 7 is a schematic diagram of a possible structure of a measurement apparatus according to an embodiment of this application. As shown in FIG. 7, a measurement apparatus 70 may include: a receiving module 71.

The receiving module 71 is configured to receive a first measurement result sent by a first terminal device, where the first measurement result is a measurement result determined by the first terminal device based on a sidelink reference signal sent by a second terminal device, and the first measurement result includes at least one of the following: a relative position, a distance, a position of the first terminal device, an angle measurement result, and a confidence.

In a possible implementation, the measurement apparatus 70 provided in this embodiment of this application further includes: a sending module. The sending module is configured to send a measurement result request to the first terminal device, where the measurement result request includes at least one of the following: a positioning measurement result request, a positioning result request, a positioning request type, first indication information, second indication information, third indication information, and a measurement result feedback period, where the first indication information indicates whether additional path measurement is required, the second indication information indicates whether first path measurement is required, and the third indication information indicates whether receive beam information of the first terminal device is required.

In a possible implementation, the sending module is specifically configured to perform at least one of the following:
sending the measurement result request to the first terminal device in a first manner, where the first manner is broadcast, multicast or unicast;
sending the measurement result request to the first terminal device by using a preconfigured candidate resource set or resource pool;
sending the measurement result request to the first terminal device through a Uu interface;
carrying the measurement result request in first stage SCI, second stage SCI, or a PSSCH for sending;
carrying the measurement result request in a payload of the sidelink reference signal for sending; and
carrying the measurement result request in first assistance information for sending.

In a possible implementation, the measurement apparatus 70 provided in this embodiment of this application further includes: a sending module. The sending module is configured to send first assistance information to the first terminal device, where the first assistance information includes at least one of the following: identification information of the second terminal device, position information of the second terminal device, identification information of the first terminal device, identification information of a transmit antenna panel, position information of the antenna panel, identification information of a transmit antenna port, position information of the antenna port, identification information of an ARP, position information of the antenna reference point, height information of a transmit antenna, position information of the antenna, identification information of a transmit beam, angle information of the transmit beam, QCL information, speed information of the second terminal device, trajectory information of the second terminal device, a measured and/or reported reference direction, an expected angle measurement window, and a coordinate system and a reference direction of the expected angle measurement window.

In a possible implementation, the sending module is specifically configured to perform at least one of the following:
sending the first assistance information to the first terminal device in a first manner, where the first manner is broadcast, multicast or unicast;
sending the first assistance information to the first terminal device by using a preconfigured candidate resource set or resource pool;
sending the first assistance information to the first terminal device through a Uu interface; and
carrying the first assistance information in first stage SCI, second stage SCI, or a PSSCH for sending.

In a possible implementation, the receiving module 71 is further configured to receive antenna information sent by the first terminal device, where the antenna information includes at least one of the following: panel information, antenna information in a panel, and ARP information.

In a possible implementation, the receiving module 71 is further configured to receive a second measurement result sent by the second terminal device, where the second measurement result is the first measurement result, or a measurement result obtained by the second terminal device by processing the first measurement result.

In a measurement apparatus provided in an embodiment of this application, in a sidelink angle positioning scenario, the measurement apparatus may perform related measurement based on a sidelink reference signal of a second terminal device, that is, perform measurement of a position, a distance, an angle, and/or the like, to obtain a measurement result used for positioning the second terminal device, thereby implementing accurate positioning of the second terminal device.

The measurement apparatus provided in this embodiment of this application can implement processes implemented by the control node in the method embodiment, and achieve the same technical effects. To avoid repetition, details are not described herein again.

Optionally, as shown in FIG. 8, an embodiment of this application further provides a communication device 800, including a processor 801, a memory 802, a program or instructions stored in the memory 802 and executable on the processor 801. For example, in a case that the communication device 800 is a first terminal device, the program or the instructions, when executed by the processor 801, implement processes of Embodiment 1 of the measurement method, and can achieve the same technical effects. To avoid repetition, details are not described herein again. When the communication device 800 is a second terminal device, the program or the instructions, when executed by the processor 801, implement processes of Embodiment 2 of the measurement method, and can achieve the same technical effects. To avoid repetition, details are not described herein again. When the communication device 800 is a control node, the program or the instructions, when executed by the processor 801, implement processes of Embodiment 3 of the measurement method, and can achieve the same technical effects. To avoid repetition, details are not described herein again.

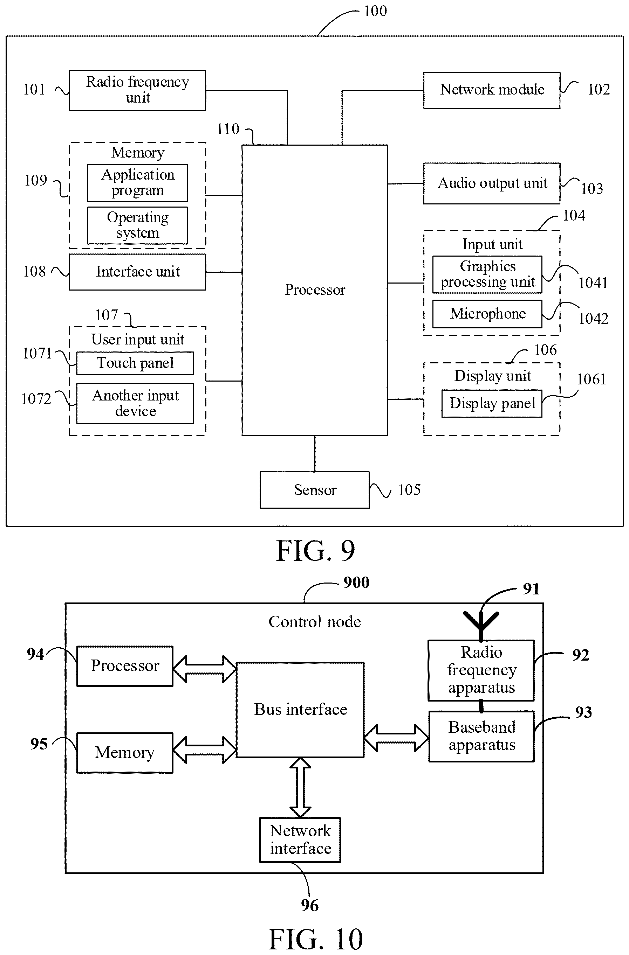

An embodiment of this application further provides a terminal device, including a processor and a communication interface, where the communication interface is configured to receive a sidelink reference signal of a second terminal device; and the processor is configured to determine a first measurement result corresponding to the sidelink reference signal, where the first measurement result includes at least one of the following: a relative position, a distance, a position of a first terminal device, an angle measurement result, and a confidence. Alternatively, the communication interface is configured to send a sidelink reference signal to a first terminal device, where the sidelink reference signal is used by the first terminal device to determine a first measurement result, and the first measurement result includes at least one of the following: a relative position, a distance, a position of the first terminal device, an angle measurement result, and a confidence. The terminal device embodiment corresponds to the foregoing terminal side method embodiment, and per implementation process and implementation of the foregoing method embodiment can be applied to the terminal device embodiment, and can achieve the same technical effects. Specifically, FIG. 9 is a schematic diagram of a hardware structure of a terminal device that implements the embodiments of this application.

A terminal device 100 includes, but is not limited to, at least part of components such as a radio frequency unit 101, a network module 102, an audio output unit 103, an input unit 104, a sensor 105, a display unit 106, a user input unit 107, an interface unit 108, a memory 109, and a processor 110.

It should be noted that, the terminal device 100 may be the first terminal device or the second terminal device in the foregoing embodiments.

It may be understood by those skilled in the art that the terminal device 100 may further include a power supply (for example, a battery) for supplying power to various components, and the power supply may be logically connected to the processor 110 through a power management system, to implement functions such as managing charging or discharging, and power consumption management through the power management system. A terminal device structure shown in FIG. 9 does not constitute a limitation to the terminal device, and the terminal device may include more or fewer components than those shown in the figure, or some components may be combined, or a different component deployment may be used. Details are not described herein again.

It should be understood that, in this embodiment of this application, the input unit 104 may include a graphics processing unit (Graphics Processing Unit, GPU) 1041 and a microphone 1042. The graphics processing unit 1041 processes image data of a still picture or a video obtained by an image capture apparatus (such as a camera) in a video capture mode or an image capture mode. The display unit 106 may include a display panel 1061, for example, the display panel 1061 may be configured in a form such as a liquid crystal display or an organic light-emitting diode. The user input unit 107 includes a touch panel 1071 and another input device 1072. The touch panel 1071 is also referred to as a touchscreen. The touch panel 1071 may include a touch detection apparatus and a touch controller. The another input device 1072 may include, but is not limited to, a physical keyboard, a function key (such as a volume control key, a switch key, or the like), a trackball, a mouse, and an operating lever, which is not described in detail herein.

In this embodiment of this application, the radio frequency unit 101 receives downlink data from a network side device and sends downlink data to the processor 110 for processing. In addition, the radio frequency unit sends uplink data to the network side device. Generally, the radio frequency unit 101 includes, but is not limited to, an antenna, at least one amplifier, a transceiver, a coupler, a low noise amplifier, a duplexer, and the like.

The memory 109 may be configured to store a software program or instructions, and various data. The memory 109 may mainly include a storage program or instruction area and a storage data area, where the storage program or instruction area may store an operating system, an application program or instructions required for at least one function (for example, a sound playing function, an image playing function, or the like). In addition, the memory 109 may include a high speed random access memory, and may also include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the non-volatile memory may be at least one magnetic disk storage device, a flash memory device, or other volatile solid-state storage devices.

The processor 110 may include one or more processing units. Optionally, the processor 110 may integrate an application processor and a modem. The application processor mainly processes an operating system, a user interface, an application program or instructions, and the like. The modem mainly processes wireless communication, such as a baseband processor. It may be understood that the foregoing modem may not be integrated into the processor 110.

The radio frequency unit 101 is configured to receive a sidelink reference signal of a second terminal device. The processor 110 is configured to determine a first measurement result corresponding to the sidelink reference signal, where the first measurement result includes at least one of the following: a relative position, a distance, a position of a first terminal device, an angle measurement result, and a confidence.

Alternatively, the radio frequency unit 101 is configured to send a sidelink reference signal to a first terminal device, where the sidelink reference signal is used by the first terminal device to determine a first measurement result, and the first measurement result includes at least one of the following: a relative position, a distance, a position of the first terminal device, an angle measurement result, and a confidence.

In a terminal device provided in an embodiment of this application, in a sidelink angle positioning scenario, a first terminal device may perform related measurement based on a sidelink reference signal of a second terminal device, that is, perform measurement of a position, a distance, an angle, and/or the like, to obtain a measurement result used for positioning the second terminal device, thereby implementing accurate positioning of the second terminal device.

The terminal device provided in this embodiment of this application can implement processes implemented by the first terminal device and the second terminal device in the method embodiment, and achieve the same technical effects. To avoid repetition, details are not described herein again.

An embodiment of this application further provides a control node, including a processor and a communication interface, where the communication interface is configured to receive a first measurement result sent by a first terminal device, where the first measurement result is a measurement result determined by the first terminal device based on a sidelink reference signal sent by a second terminal device, and the first measurement result includes at least one of the following: a relative position, a distance, a position of the first terminal device, an angle measurement result, and a confidence. The control node embodiment corresponds to the foregoing control node method embodiment, and per implementation process and implementation of the foregoing method embodiment can be applied to the control node embodiment, and can achieve the same technical effects.

Specifically, an embodiment of this application further provides a control node. Herein, an example in which the control node is a network side device is used for illustration. As shown in FIG. 10, a control node 900 includes an antenna 91, a radio frequency apparatus 92, and a baseband apparatus 93. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes information that is to be sent, and sends the information to the radio frequency apparatus 92. The radio frequency apparatus 92 processes the received information and sends the information by using the antenna 91.

A frequency band processing apparatus may be located in the baseband apparatus 93, so that the method executed by the control node in the foregoing embodiments can be implemented in the baseband apparatus 93. The baseband apparatus 93 includes a processor 94 and a memory 95.

The baseband apparatus 93 may include, for example, at least one baseband plate. A plurality of chips are disposed on the baseband plate. As shown in FIG. 10, one of the plurality of chips is, for example, the processor 94, and is connected to the memory 95, to invoke a program in the memory 95 to perform operations of the control node in the foregoing method embodiments.

The baseband apparatus 93 may further include a network interface 96, configured to exchange information with the radio frequency apparatus 92. The interface is, for example, a common public radio interface (Common Public Radio Interface, CPRI).

The radio frequency apparatus 92 is configured to receive a first measurement result sent by a first terminal device, where the first measurement result is a measurement result determined by the first terminal device based on a sidelink reference signal sent by a second terminal device, and the first measurement result includes at least one of the following: a relative position, a distance, a position of the first terminal device, an angle measurement result, and a confidence.

In a control node provided in an embodiment of this application, in a sidelink angle positioning scenario, the control node may perform related measurement based on a sidelink reference signal of a second terminal device, that is, perform measurement of a position, a distance, an angle, and/or the like, to obtain a measurement result used for positioning the second terminal device, thereby implementing accurate positioning of the second terminal device.

The control node provided in this embodiment of this application can implement processes implemented by the control node in the method embodiment, and achieve the same technical effects. To avoid repetition, details are not described herein again.

Specifically, the control node in this embodiment of the present invention further includes: instructions or programs stored in the memory 95 and executable on the processor 94, and the processor 94 invokes the instructions or the program in the memory 95 to perform the method executed by various modules or units, and can achieve the same technical effects. To avoid repetition, details are not described herein again.

An embodiment of this application further provides a readable storage medium, storing a program or instructions. The program or the instructions, when executed by a processor, implement processes of the embodiments of the measurement method, and can achieve the same technical effects. To avoid repetition, details are not described herein again.

The processor is the processor in the terminal device or the control node in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, including a processor and a communication interface, where the communication interface is coupled to the processor, and the processor is configured to run a program or instructions, to implement processes of the embodiments of the measurement method, and can achieve the same technical effects. To avoid repetition, details are not described herein again.

It should be understood that, the chip mentioned in this embodiment of this application may also be referred to as a system-level chip, a system chip, a chip system, a system on chip, or the like.

It should be noted that, the term " include", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one ..." does not exclude that there are still other same elements in the processes, methods, objects, or apparatuses. In addition, it should be noted that the scope of the methods and apparatuses in the implementations of this application is not limited to performing the functions in the order shown or discussed, but may also include performing, according to involved functions, the functions basically simultaneously or in a reverse order. For example, the described methods may be performed in an order different from that described, and various steps may also be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions in this application essentially or the part contributing to the existing technologies may be implemented in the form of a software product. The computer software product is stored in a storage medium (for example, a read-only memory (ROM)/random access memory (RAM), a magnetic disk or an optical disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A measurement method, comprising:
receiving, by a first terminal device, a sidelink reference signal of a second terminal device; and
determining, by the first terminal device, a first measurement result corresponding to the sidelink reference signal, wherein the first measurement result comprises at least one of the following: a relative position, a distance, a position of the first terminal device, an angle measurement result, and a confidence.

2. The method according to claim 1, wherein the relative position comprises at least one of the following:
a reference direction, an angle of arrival, an angle of departure, and a relative distance.

3. The method according to claim 1, wherein the angle measurement result comprises at least one of the following: an angle of arrival, an angle of departure, angle error information, angle confidence information, reference signal received power RSRP information, reference signal received quality RSRQ information, time stamp information, a reference direction, coordinate system conversion information, and angle rotation information.

4. The method according to claim 2 or 3, wherein the reference direction comprises at least one of the following: a global coordinate system GCS, a local coordinate system LCS, a speed direction of the first terminal device, a speed direction of the second terminal device, a trajectory direction of the first terminal device, and a trajectory direction of the second terminal device.

5. The method according to claim 3, wherein the time stamp information comprises at least one of the following:
a time stamp corresponding to the first terminal device;
a relative time stamp of the first terminal device and the second terminal device;
a relative time stamp of the first terminal device and a control node;
an identifier of the first terminal device associated with a time stamp;
an identifier of the second terminal device associated with a time stamp;
an identifier of a terminal device pair associated with a time stamp, wherein the terminal device pair comprises the first terminal device and the second terminal device; and
an identifier of the control node associated with a time stamp.

6. The method according to claim 3, wherein the angle measurement result further comprises at least one of the following: a first path angle measurement result and an additional path angle measurement result, wherein
the first path angle measurement result comprises at least one of the following: a first path angle of arrival, a first path angle of departure, and first path RSRP information; and the additional path angle measurement result comprises at least one of the following: an additional path angle of arrival, an additional path angle of departure, and additional path RSRP information.

7. The method according to claim 6, wherein the first path angle measurement result is measured and/or reported by per first path, and per first path measures and/or reports at least one angle measurement result;
and/or
the additional path angle measurement result is measured and/or reported by per additional path, and per additional path measures and/or reports at least one angle measurement result, wherein
a quantity of the at least one angle measurement result is determined by any one of the following:
protocol agreement, an indication of the second terminal device, and an indication of a control node.

8. The method according to claim 2, wherein the angle of arrival includes a horizontal angle of arrival and a vertical angle of arrival of the first terminal device relative to the reference direction;
and/or
the angle of departure includes a horizontal angle of arrival and a vertical angle of arrival of the second terminal device relative to the reference direction.

9. The method according to claim 1, wherein after the determining, by the first terminal device, a first measurement result corresponding to the sidelink reference signal, the method further comprises:
sending, by the first terminal device, the first measurement result to the second terminal device and/or a control node.

10. The method according to claim 9, wherein the sending, by the first terminal device, the first measurement result to the second terminal device and/or a control node comprises at least one of the following:
sending, by the first terminal device, the first measurement result to the second terminal device and/or the control node in a first manner, wherein the first manner is broadcast, multicast or unicast;
sending, by the first terminal device, the first measurement result to the second terminal device and/or the control node on a physical sidelink shared channel PSSCH;
sending, by the first terminal device, the first measurement result to the second terminal device and/or the control node on a physical sidelink feedback channel PSFCH;
sending, by the first terminal device, the first measurement result to the second terminal device and/or the control node through a Uu interface; and
sending, by the first terminal device, the first measurement result to the second terminal device and/or the control node by using a preconfigured candidate resource set or resource pool.

11. The method according to claim 1 or 9, wherein the method further comprises:
receiving, by the first terminal device, a measurement result request sent by the second terminal device or the control node, wherein the measurement result request comprises at least one of the following: a positioning measurement result request, a positioning result request, a positioning request type, first indication information, second indication information, third indication information, and a measurement result feedback period, wherein
the first indication information indicates whether additional path measurement is required, the second indication information indicates whether first path measurement is required, and the third indication information indicates whether receive beam information of the first terminal device is required.

12. The method according to claim 11, wherein the measurement result request is sent by the second terminal device or the control node in a first manner, wherein the first manner is broadcast, multicast or unicast;
and/or
the measurement result request is sent by the second terminal device or the control node by using a preconfigured candidate resource set or resource pool;
and/or
the measurement result request is sent by the second terminal device or the control node through a Uu interface;
and/or
the measurement result request is carried in first stage sidelink control information SCI, second stage SCI, or a PSSCH;
and/or
the measurement result request is carried in a payload of the sidelink reference signal of the second terminal device for sending;
and/or
the measurement result request is carried in first assistance information for sending.

13. The method according to claim 1 or 9, wherein the determining, by the first terminal device, a first measurement result corresponding to the sidelink reference signal comprises:
in a case that the first terminal device has not received a measurement result request and the first terminal device has received the sidelink reference signal and/or first assistance information, measuring and/or sending, by the first terminal device, the first measurement result corresponding to the sidelink reference signal.

14. The method according to claim 1, wherein the method further comprises:
receiving, by the first terminal device, first assistance information sent by the second terminal device or a control node, wherein
the first assistance information comprises at least one of the following: identification information of the second terminal device, position information of the second terminal device, identification information of the first terminal device, identification information of a transmit antenna panel, position information of an antenna panel, identification information of a transmit antenna port, position information of an antenna port, identification information of an antenna reference point ARP, position information of the antenna reference point, height information of a transmit antenna, position information of an antenna, identification information of a transmit beam, angle information of the transmit beam, quasi co-location QCL information, speed information of the second terminal device, trajectory information of the second terminal device, a measured and/or reported reference direction, an expected angle measurement window, and a coordinate system and a reference direction of the expected angle measurement window.

15. The method according to claim 14, wherein a configuration manner of the expected angle measurement window comprises at least one of the following: configuring for per terminal device, configuring for per terminal device pair, configuring for per antenna, configuring for per antenna pair, configuring for per ARP, and configuring for per ARP pair.

16. The method according to claim 14 or 15, wherein the expected angle measurement window comprises at least one of the following: identification information of the terminal device pair, identification information of the antenna pair, and identification information of the ARP pair.

17. The method according to claim 14, wherein the first assistance information is sent by the second terminal device or the control node in a first manner, wherein the first manner is broadcast, multicast or unicast;
and/or
the first assistance information is sent by the second terminal device or the control node by using a preconfigured candidate resource set or resource pool;
and/or
the first assistance information is sent by the second terminal device or the control node through a Uu interface;
and/or
the first assistance information is carried in first stage SCI, second stage SCI, or a PSSCH for sending.

18. The method according to claim 1, wherein the first measurement result further comprises at least one of the following: identification information of the first terminal device, identification information of a receive antenna panel, identification information of a receive antenna port, identification information of a receive ARP, identification information of the sidelink reference signal, line of sight LOS/non line of sight NLOS indication information, identification information of a receive beam, speed information of the first terminal device, trajectory information of the first terminal device, and antenna information of the first terminal device.

19. The method according to claim 1, wherein the method further comprises:
sending, by the first terminal device, antenna information to the second terminal device and/or a control node, wherein the antenna information comprises at least one of the following: panel information, antenna information in a panel, and ARP information.

20. The method according to claim 19, wherein the panel information comprises at least one of the following: panel identification information, panel quantity information, and panel position information; and
the panel position information comprises at least one of the following: arrangement information of a plurality of panels, a panel spacing, a position relative to a reference panel, a position of a panel relative to a local coordinate system or a global coordinate system of the first terminal device, conversion parameters between the local coordinate system and the global coordinate system of the first terminal device, and a first position relationship, wherein the first position relationship is a position relationship between a center position of the first terminal device and the local coordinate system or the global coordinate system of the first terminal device, or a position relationship between the center position of the first terminal device and an antenna panel.

21. The method according to claim 19 or 20, wherein the second terminal device or the control node provides panel information for per sidelink reference signal/reference signal resource/reference signal resource set, or a sidelink reference signal/reference signal resource/reference signal resource set is associated with one piece of panel information;
and/or
the first terminal device provides panel information for the first measurement result, or the first measurement result is associated with one piece of panel information.

22. The method according to claim 19, wherein the antenna information in the panel comprises at least one of the following: antenna height information, antenna identification information, antenna quantity information, antenna position information, and antenna polarization information.

23. The method according to claim 22, wherein the antenna position information comprises at least one of the following: arrangement information of a plurality of antennas, a position relative to a reference antenna, an antenna spacing, an antenna aperture, a position of an antenna in a panel, a position of the antenna relative to a local coordinate system or a global coordinate system of the first terminal device, conversion parameters between the local coordinate system and the global coordinate system of the first terminal device, and a second position relationship, wherein the second position relationship is a position relationship between a center position of the first terminal device and the local coordinate system or the global coordinate system of the first terminal device, or a position relationship between the center position of the first terminal device and the antenna.

24. The method according to claim 22 or 23, wherein the second terminal device or the control node provides antenna information for per sidelink reference signal/reference signal resource/reference signal resource set, or a sidelink reference signal/reference signal resource/reference signal resource set is associated with one piece of antenna information in the panel;
and/or
the first terminal device provides antenna information in the panel for the first measurement result, or the first measurement result is associated with one piece of antenna information in the panel.

25. The method according to claim 19, wherein the ARP information comprises at least one of the following: ARP identification information, ARP quantity information, and ARP position information.

26. The method according to claim 25, wherein the ARP position information comprises at least one of the following: arrangement information of a plurality of ARPs, a position of an ARP in an antenna panel, a position relative to a reference ARP, a spacing between ARPs, a position of the ARP relative to a local coordinate system or a global coordinate system of the first terminal device, conversion parameters between the local coordinate system and the global coordinate system of the first terminal device, and a third position relationship, wherein the third position relationship is a position relationship between a center position of the first terminal device and the local coordinate system or the global coordinate system of the first terminal device, or a position relationship between the center position of the first terminal device and the ARP.

27. The method according to claim 25 or 26, wherein the second terminal device or the control node provides ARP information for per sidelink reference signal/reference signal resource/reference signal resource set, or a sidelink reference signal/reference signal resource/reference signal resource set is associated with one piece of ARP information;
and/or
the first terminal device provides ARP information for the first measurement result, or the first measurement result is associated with one piece of ARP information.

28. The method according to claim 19, wherein the sending, by the first terminal device, antenna information to the second terminal device or a control node comprises at least one of the following:
sending, by the first terminal device, the antenna information to the second terminal device or the control node in a first manner, wherein the first manner is broadcast, multicast or unicast;
sending, by the first terminal device, the antenna information to the second terminal device or the control node on a PSSCH;
sending, by the first terminal device, the antenna information to the second terminal device or the control node on a PSSCH;
sending, by the first terminal device, the antenna information to the second terminal device or the control node through a Uu interface; and
sending, by the first terminal device, the antenna information to the second terminal device or the control node by using a preconfigured candidate resource set or resource pool.

29. A measurement method, comprising:
sending, by a second terminal device, a sidelink reference signal to a first terminal device, wherein
the sidelink reference signal is used by the first terminal device to determine a first measurement result, and the first measurement result comprises at least one of the following: a relative position, a distance, a position of the first terminal device, an angle measurement result, and a confidence.

30. The method according to claim 29, wherein after the sending, by a second terminal device, a sidelink reference signal to a first terminal device, the method further comprises:
receiving, by the second terminal device, the first measurement result sent by the first terminal device.

31. The method according to claim 29 or 30, wherein the method further comprises:
sending, by the second terminal device, a measurement result request to the first terminal device, wherein the measurement result request comprises at least one of the following: a positioning measurement result request, a positioning result request, a positioning request type, first indication information, second indication information, third indication information, and a measurement result feedback period, wherein
the first indication information indicates whether additional path measurement is required, the second indication information indicates whether first path measurement is required, and the third indication information indicates whether receive beam information of the first terminal device is required.

32. The method according to claim 31, wherein the sending, by the second terminal device, a measurement result request to the first terminal device comprises at least one of the following:
sending, by the second terminal device, the measurement result request to the first terminal device in a first manner, wherein the first manner is broadcast, multicast or unicast;
and/or
sending, by the second terminal device, the measurement result request to the first terminal device by using a preconfigured candidate resource set or resource pool;
and/or
sending, by the second terminal device, the measurement result request to the first terminal device through a Uu interface;
and/or
carrying, by the second terminal device, the measurement result request in first stage sidelink control information SCI, second stage SCI, or a physical sidelink shared channel PSSCH for sending;
and/or
carrying, by the second terminal device, the measurement result request in a payload of the sidelink reference signal for sending;
and/or
carrying, by the second terminal device, the measurement result request in first assistance information for sending.

33. The method according to claim 29, wherein the method further comprises:
sending, by the second terminal device, first assistance information to the first terminal device and/or a control node, wherein
the first assistance information comprises at least one of the following: identification information of the second terminal device, position information of the second terminal device, identification information of the first terminal device, identification information of a transmit antenna panel, position information of an antenna panel, identification information of a transmit antenna port, position information of an antenna port, identification information of an antenna reference point ARP, position information of the antenna reference point, height information of a transmit antenna, position information of an antenna, identification information of a transmit beam, angle information of the transmit beam, quasi co-location QCL information, speed information of the second terminal device, trajectory information of the second terminal device, a measured and/or reported reference direction, an expected angle measurement window, and a coordinate system and a reference direction of the expected angle measurement window.

34. The method according to claim 33, wherein the sending, by the second terminal device, first assistance information to the first terminal device and/or a control node comprises at least one of the following:
sending, by the second terminal device, the first assistance information to the first terminal device and/or the control node in a first manner, wherein the first manner is broadcast, multicast or unicast;
sending, by the second terminal device, the first assistance information to the first terminal device and/or the control node by using a preconfigured candidate resource set or resource pool;
sending, by the second terminal device, the first assistance information to the first terminal device and/or the control node through a Uu interface; and
carrying, by the second terminal device, the first assistance information in first stage SCI, second stage SCI, or a PSSCH for sending.

35. The method according to claim 29, wherein the method further comprises:
receiving, by the second terminal device, antenna information sent by the first terminal device, wherein the antenna information comprises at least one of the following: panel information, antenna information in a panel, and ARP information.

36. The method according to claim 30, wherein the method further comprises:
sending, by the second terminal device, a second measurement result to a control node, wherein the second measurement result is the first measurement result, or a measurement result obtained by the second terminal device by processing the first measurement result.

37. A measurement method, comprising:
receiving, by a control node, a first measurement result sent by a first terminal device, wherein the first measurement result is a measurement result determined by the first terminal device based on a sidelink reference signal sent by a second terminal device, and the first measurement result comprises at least one of the following: a relative position, a distance, a position of the first terminal device, an angle measurement result, and a confidence.

38. The method according to claim 37, wherein the method further comprises:
sending, by the control node, a measurement result request to the first terminal device, wherein the measurement result request comprises at least one of the following: a positioning measurement result request, a positioning result request, a positioning request type, first indication information, second indication information, third indication information, and a measurement result feedback period, wherein
the first indication information indicates whether additional path measurement is required, the second indication information indicates whether first path measurement is required, and the third indication information indicates whether receive beam information of the first terminal device is required.

39. The method according to claim 38, wherein the sending, by the control node, a measurement result request to the first terminal device comprises at least one of the following:
sending, by the control node, the measurement result request to the first terminal device in a first manner, wherein the first manner is broadcast, multicast or unicast;
sending, by the control node, the measurement result request to the first terminal device by using a preconfigured candidate resource set or resource pool;
sending, by the control node, the measurement result request to the first terminal device through a Uu interface;
carrying, by the control node, the measurement result request in first stage sidelink control information SCI, second stage SCI, or a physical sidelink shared channel PSSCH for sending;
carrying, by the control node, the measurement result request in a payload of the sidelink reference signal for sending; and
carrying, by the control node, the measurement result request in first assistance information for sending.

40. The method according to claim 37, wherein the method further comprises:
sending, by the control node, first assistance information to the first terminal device, wherein
the first assistance information comprises at least one of the following: identification information of the second terminal device, position information of the second terminal device, identification information of the first terminal device, identification information of a transmit antenna panel, position information of an antenna panel, identification information of a transmit antenna port, position information of an antenna port, identification information of an antenna reference point ARP, position information of the antenna reference point, height information of a transmit antenna, position information of an antenna, identification information of a transmit beam, angle information of the transmit beam, quasi co-location QCL information, speed information of the second terminal device, trajectory information of the second terminal device, a measured and/or reported reference direction, an expected angle measurement window, and a coordinate system and a reference direction of the expected angle measurement window.

41. The method according to claim 40, wherein the sending, by the control node, first assistance information to the first terminal device comprises at least one of the following:
sending, by the control node, the first assistance information to the first terminal device in a first manner, wherein the first manner is broadcast, multicast or unicast;
sending, by the control node, the first assistance information to the first terminal device by using a preconfigured candidate resource set or resource pool;
sending, by the control node, the first assistance information to the first terminal device through a Uu interface; and
carrying, by the control node, the first assistance information in first stage SCI, second stage SCI, or a PSSCH for sending.

42. The method according to claim 37, wherein the method further comprises:
receiving, by the control node, antenna information sent by the first terminal device, wherein the antenna information comprises at least one of the following: panel information, antenna information in a panel, and ARP information.

43. The method according to claim 37, wherein the method further comprises:
receiving, by the control node, a second measurement result sent by the second terminal device, wherein the second measurement result is the first measurement result, or a measurement result obtained by the second terminal device by processing the first measurement result.

44. A measurement apparatus, comprising: a receiving module and a determining module, wherein
the receiving module is configured to receive a sidelink reference signal of a second terminal device; and
the determining module is configured to determine a first measurement result corresponding to the sidelink reference signal, wherein the first measurement result comprises at least one of the following: a relative position, a distance, a position of a first terminal device, an angle measurement result, and a confidence.

45. A measurement apparatus, comprising: a sending module, wherein
the sending module is configured to send a sidelink reference signal to a first terminal device, wherein
the sidelink reference signal is used by the first terminal device to determine a first measurement result, and the first measurement result comprises at least one of the following: a relative position, a distance, a position of the first terminal device, an angle measurement result, and a confidence.

46. A measurement apparatus, comprising: a receiving module, wherein
the receiving module is configured to receive a first measurement result sent by a first terminal device, wherein the first measurement result is a measurement result determined by the first terminal device based on a sidelink reference signal sent by a second terminal device, and the first measurement result comprises at least one of the following: a relative position, a distance, a position of the first terminal device, an angle measurement result, and a confidence.

47. A terminal device, comprising a processor, a memory, and a program or instructions stored in the memory and executable on the processor, the program or the instructions, when executed by the processor, implementing steps of the measurement method according to any one of claims 1 to 28, or implementing steps of the measurement method according to any one of claims 29 to 36.

48. A control node, comprising a processor, a memory, and a program or instructions stored in the memory and executable on the processor, the program or the instructions, when executed by the processor, implementing steps of the measurement method according to any one of claims 37 to 43.

49. A readable storage medium, storing a program or instructions, the program or the instructions, when executed by the processor, implementing steps of the measurement method according to any one of claims 1 to 28, or implementing steps of the measurement method according to any one of claims 29 to 36, or implementing steps of the measurement method according to any one of claims 37 to 43.

50. A communication system, wherein the communication system comprises the measurement apparatus according to any one of claims 44 to 46; or
the communication system comprises the terminal device according to claim 47 and the control node according to claim 48.

51. A computer program product, wherein the program product is configured to be executed by at least one processor to implement the measurement method according to any one of claims 1 to 28, or implement the measurement method according to any one of claims 29 to 36, or implement the measurement method according to any one of claims 37 to 43.

52. A terminal device, wherein the terminal device is configured to perform the measurement method according to any one of claims 1 to 28, or perform the measurement method according to any one of claims 29 to 36.

53. A control node, wherein the control node is configured to perform the measurement method according to any one of claims 37 to 43.
